# EUROPEAN PATENT APPLICATION

(11) **EP 4 429 146 A1**
(43) Date of publication of application: **11.09.2024**
(21) Application number: 22897949.8
(22) Date of filing: 25.11.2022
(51) Int. Cl.: H04L 1/18, H04W 72/12

(54) **COMMUNICATION METHOD AND DEVICE**

(30) Priority: 27.11.2021 CN 202111426402; 13.12.2021 CN 202111520509
(71) Applicant: Huawei Technologies Co., Ltd., Shenzhen, Guangdong 518129 (CN)
(72) Inventor: ZHANG, Mengchen, Shenzhen, Guangdong 518129 (CN); XU, Haibo, Shenzhen, Guangdong 518129 (CN); AHLUWALIA, Jagdeep Singh, Shenzhen, Guangdong 518129 (CN)
(74) Representative: Gill Jennings & Every LLP
(86) International application number: PCT/CN2022/134519
(87) International publication number: WO 2023/093868

(57) **Abstract**

This application relates to a communication method and device. A terminal device sends first data to an access network device on a first resource, and starts a first timer, where the first resource is a preconfigured resource, the first data is small data, and the terminal device is in an RRC non-connected state. If first information is received before the first timer expires, the first timer is stopped, where the first information is information indicating that the first data is successfully transmitted, and the first information is MAC layer information, or the first information is information for scheduling a resource. This application provides a mechanism for determining, by using the first timer, whether the data is successfully sent, and implementation is simple. If the first information is, for example, the MAC layer information, feedback information at a physical layer does not need to be introduced. This reduces impact on the physical layer, and enables the solutions in embodiments of this application to be more easily compatible with the conventional technology.

## Description

### CROSS-REFERENCE TO RELATED APPLICATIONS

This application claims priority to Chinese Patent Application No. 202111426402.4, filed with the China National Intellectual Property Administration on November 27, 2021 and entitled "INFORMATION PROCESSING METHOD, UE, AND NETWORK DEVICE", which is incorporated herein by reference in its entirety. This application claims priority to Chinese Patent Application No. 202111520509.5, filed with the China National Intellectual Property Administration on December 13, 2021 and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

In a new radio (new radio, NR) system, a base station may allocate a configured grant small data transmission (configured grant small data transmission, CG-SDT) resource to user equipment (user equipment, UE). When the UE is in a radio resource control (radio resource control, RRC)_inactive (INACTIVE) state, if small data transmission is required, uplink small data may be sent by using the CG-SDT resource, without a need of requesting a resource from the base station.

Each time after sending uplink small data on the CG-SDT resource, the UE needs to learn whether the uplink small data is successfully sent. If the uplink small data is not successfully transmitted, the UE may need to retransmit the uplink small data. Currently, there is no solution about how the UE in CG-SDT determines whether the uplink small data is successfully sent.

### SUMMARY

Embodiments of this application provide a communication method and device, so that a terminal device can determine whether small data is successfully sent when sending the small data.

According to a first aspect, a first communication method is provided. The method may be performed by a terminal device, or may be performed by a larger device including a terminal device, or may be performed by a chip system or another functional module. The chip system or the functional module can implement a function of the terminal device. The chip system or the functional module is, for example, disposed in the terminal device. The method includes: sending first data to an access network device on a first resource, and starting a first timer, where the first resource is a preconfigured resource, the first data is small data, and the terminal device is in an RRC non-connected state; and if first information is received before the first timer expires, stopping the first timer, where the first information is information indicating that the first data is successfully transmitted, and the first information is MAC layer information, or the first information is information for scheduling a resource.

In this embodiment of this application, the terminal device may start the first timer after sending the first data. If the first information is received before the first timer expires, the first timer is stopped. In this case, the terminal device may determine that the first data is successfully sent. A mechanism for determining, by using the first timer, whether the data is successfully sent is provided, and implementation is simple. If the first information is, for example, the MAC layer information, feedback information at a physical layer does not need to be introduced. This reduces impact on the physical layer, and enables solutions in embodiments of this application to be more easily compatible with the conventional technology. Alternatively, the first information is, for example, the information for scheduling a resource, and the information for scheduling a resource is currently defined existing information. Using the information for scheduling a resource as the first information can reduce impact on a current protocol without introducing new information.

With reference to the first aspect, in a first optional implementation of the first aspect, the first timer is a first timer corresponding to a first HARQ process, and the first HARQ process is used to send the first data. When sending data, the terminal device may send the data by using a HARQ process. The UE may maintain one first timer for all HARQ processes, or may respectively maintain first timers for different HARQ processes. If the UE respectively maintains different first timers for different HARQ processes, the first timer herein is, for example, the first timer corresponding to the first HARQ process.

Optionally, the first resource is associated with the first HARQ process. Different HARQ processes may be associated with different resources used for small data transmission. If the terminal device sends the first data in the first HARQ process, the used first resource is a resource associated with the first HARQ process.

With reference to the first aspect or the first optional implementation of the first aspect, in a second optional implementation of the first aspect, the first information is the information indicating that the first data is successfully transmitted. The first information is a first MAC subheader, a value of an LCID included in the first MAC subheader is a first value. If the value of the LCID is the first value, it indicates that the first data is successfully transmitted. Alternatively, the first information is a MAC CE, the MAC CE indicates that the first data is successfully transmitted, the MAC CE is identified by a second MAC subheader, and a value of an LCID included in the second MAC subheader is a second value. If the value of the LCID is the second value, it indicates that the MAC CE is a MAC CE having a function of indicating the first information. Alternatively, the first information is a third MAC subheader, the terminal device receives the first information within first duration after sending the first data, and the first duration corresponds to the first HARQ process. For example, the first information is implemented by using a MAC subheader, for example, the first MAC subheader or the third MAC subheader. The first MAC subheader may indicate, by using the value of the LCID, that the first data is successfully transmitted. A transmission time of the third MAC subheader may be associated with a HARQ process. Therefore, it can be determined, based on the transmission time of the third MAC subheader, that data is successfully transmitted in the corresponding HARQ process. The MAC subheader is used as the first information, so that transmission overheads can be reduced. Alternatively, the first information may be implemented by using the MAC CE. The MAC CE can carry a large amount of information, and an indication can be clearer when the MAC CE is used as the first information.

With reference to the first optional implementation of the first aspect or the second optional implementation of the first aspect, in a third optional implementation of the first aspect, the method further includes: if second information for scheduling a retransmission resource is received before the first timer expires, retransmitting the first data on a second resource, and restarting the first timer, where the second resource is a resource scheduled by using the second information. It may be understood that if the terminal device receives the first information before the first timer expires, the terminal device may stop the first timer. If the terminal device receives the second information but does not receive the first information before the first timer expires, the terminal device may retransmit the first data on the second resource. If the first data fails to be received, before the first timer expires, the access network device may send the second information to the UE, to schedule a resource to retransmit the first data. The second resource is the resource scheduled by using the second information, and may be used to transmit small data. The access network device schedules the retransmission resource, so that flexibility of the retransmission resource can be enhanced.

With reference to the first optional implementation of the first aspect or the second optional implementation of the first aspect, in a fourth optional implementation of the first aspect, the method further includes: retransmitting the first data on a third resource if the first timer expires, where the third resource is a preconfigured resource, and the third resource corresponds to the first HARQ process. It may be understood that if the terminal device receives the first information before the first timer expires, the terminal device may stop the first timer. Alternatively, if the terminal device receives second information but does not receive the first information before the first timer expires, the terminal device may retransmit the first data on a second resource. Alternatively, if the terminal device receives neither the first information nor second information when the first timer expires, the terminal device considers that the first data fails to be transmitted, and the terminal device may retransmit the first data on the third resource. In this case, automatic retransmission may be considered. The UE can perform automatic retransmission. This increases a transmission success rate of the first data. In addition, the access network device does not need to indicate retransmission, schedule a retransmission resource, or the like. This reduces signaling overheads.

With reference to the first optional implementation of the first aspect or the second optional implementation of the first aspect, in a fifth optional implementation of the first aspect, the method further includes: if the first timer expires, obtaining the first data from a first buffer, where the first buffer is used to store small data; and performing new transmission of the first data on a fourth resource by using a second HARQ process, where the fourth resource is a preconfigured resource. In this case, it is considered that the terminal device does not perform an automatic retransmission mechanism, and therefore the first buffer is enabled. If the terminal device obtains the first data from the first buffer, it is considered that the first data is newly transmitted. Therefore, the terminal device may send the first data in the second HARQ process. The second HARQ process and the first HARQ process may be a same HARQ process, or may be different HARQ processes. It may be understood that although the terminal device is actually still retransmitting the first data at this time, for the terminal device, because the first buffer is used, the terminal device considers this transmission as a new transmission process. For example, if the terminal device does not support the automatic retransmission mechanism, or a current scenario does not support the automatic retransmission mechanism, the first buffer may be enabled, so that the terminal device can actually complete retransmission of the small data.

With reference to any one of the first optional implementation of the first aspect to the fifth optional implementation of the first aspect, in a sixth optional implementation of the first aspect, the method further includes: sending third information to a HARQ entity when a first condition is met, where the third information indicates a fifth resource, the fifth resource is used to send second data, and the second data is small data. The first condition includes one or more of the following: the first information is received, where the first data is a first piece of data sent by the terminal device to the access network device; the first information is received, where the first data is a first piece of data sent by the terminal device to the access network device, and the first timer is configured and not running for a HARQ process corresponding to the fifth resource; the first timer is configured and not running for a HARQ process corresponding to the fifth resource, and no HARQ process is suspended in the HARQ entity; the first timer is configured and not running for a HARQ process corresponding to the fifth resource, and the first information is not received; the first timer is configured and not running for a HARQ process corresponding to the fifth resource; or the first buffer is empty. In a CG-SDT procedure, that the terminal device sends the small data to the access network device may include an initial transmission phase, or include an initial transmission phase and a subsequent transmission phase. If the subsequent transmission phase is included, the terminal device needs to enter the subsequent transmission phase after determining that data in the initial transmission phase is successfully transmitted. If the data in the initial transmission phase fails to be transmitted, the terminal device does not need to enter the subsequent transmission phase, but needs to continue to perform initial transmission, or perform another operation (for example, enter an RRC idle state or initiate a random access process). In the foregoing several manners, the terminal device can determine whether the initial transmission phase succeeds. It can be ensured that the terminal device performs subsequent transmission when initial transmission succeeds. Alternatively, in the foregoing several manners, the terminal device can determine whether the initial transmission phase can be started, so that the terminal device can start the initial transmission phase in time.

According to a second aspect, a second communication method is provided. The method may be performed by an access network device, or may be performed by another device that includes a function of an access network device, or may be performed by a chip system or another functional module. The chip system or the functional module can implement a function of the access network device. The chip system or the functional module is, for example, disposed in the access network device. The access network device is, for example, a base station. The method includes: receiving first data from a terminal device on a first resource, and starting a first timer, where the first resource is a preconfigured resource, the first data is small data, and the terminal device is in an RRC non-connected state; and before the first timer expires, sending first information to the terminal device, and stopping the first timer, where the first information is information indicating that the first data is successfully transmitted, and the first information is media access control MAC layer information, or the first information is information for scheduling a resource.

With reference to the second aspect, in a first optional implementation of the second aspect, the first information is the information indicating that the first data is successfully transmitted. The first information is a first MAC subheader, a value of an LCID included in the first MAC subheader is a first value. If the value of the LCID is the first value, it indicates that the first data is successfully transmitted. Alternatively, the first information is a MAC CE, the MAC CE indicates that the first data is successfully transmitted, the MAC CE is identified by a second MAC subheader, and a value of an LCID included in the second MAC subheader is a second value. If the value of the LCID is the second value, it indicates that the MAC CE is a MAC CE having a function of indicating the first information. Alternatively, the first information is a third MAC subheader, the terminal device receives the first information within first duration after sending the first data, and the first duration corresponds to the first HARQ process.

For technical effect brought by the second aspect or the optional implementations of the second aspect, refer to the descriptions of the technical effect of the first aspect or the corresponding implementations.

According to a third aspect, a third communication method is provided. The method may be performed by a terminal device, or may be performed by a larger device including a terminal device, or may be performed by a chip system or another functional module. The chip system or the functional module can implement a function of the terminal device. The chip system or the functional module is, for example, disposed in the terminal device. The method includes: sending first data to an access network device on a first resource, and starting a first timer, where the first resource is a preconfigured resource, the first data is small data, and the terminal device is in an RRC non-connected state; and if second information for scheduling a retransmission resource is received before the first timer expires, retransmitting the first data on a second resource, and restarting the first timer, where the second resource is a resource scheduled by using the second information.

According to a fourth aspect, a fourth communication method is provided. The method may be performed by an access network device, or may be performed by another device that includes a function of an access network device, or may be performed by a chip system or another functional module. The chip system or the functional module can implement a function of the access network device. The chip system or the functional module is, for example, disposed in the access network device. The access network device is, for example, a base station. The method includes: receiving first data from a terminal device on a first resource, and starting a first timer, where the first resource is a preconfigured resource, the first data is small data, and the terminal device is in an RRC non-connected state; and if the first data fails to be received, before the first timer expires, sending, to the terminal device, second information for scheduling a retransmission resource; or receiving the first data from the terminal device on a second resource, and restarting the first timer, where the second resource is a resource scheduled by using the second information.

According to a fifth aspect, a fifth communication method is provided. The method may be performed by a terminal device, or may be performed by a larger device including a terminal device, or may be performed by a chip system or another functional module. The chip system or the functional module can implement a function of the terminal device. The chip system or the functional module is, for example, disposed in the terminal device. The method includes: sending first data to an access network device on a first resource, and starting a first timer, where the first resource is a preconfigured resource, the first data is small data, and the terminal device is in an RRC non-connected state; and if the first timer expires, retransmitting the first data on a third resource, where the third resource is a preconfigured resource, and the third resource corresponds to the first HARQ process.

According to a sixth aspect, a sixth communication method is provided. The method may be performed by a terminal device, or may be performed by a larger device including a terminal device, or may be performed by a chip system or another functional module. The chip system or the functional module can implement a function of the terminal device. The chip system or the functional module is, for example, disposed in the terminal device. The method includes: sending first data to an access network device on a first resource, and starting a first timer, where the first resource is a preconfigured resource, the first data is small data, and the terminal device is in an RRC non-connected state; if the first timer expires, obtaining the first data from a first buffer, where the first buffer is used to store small data; and performing new transmission of the first data on a fourth resource by using a second HARQ process, where the fourth resource is a preconfigured resource.

According to a seventh aspect, a seventh communication method is provided. The method may be performed by an access network device, or may be performed by another device that includes a function of an access network device, or may be performed by a chip system or another functional module. The chip system or the functional module can implement a function of the access network device. The chip system or the functional module is, for example, disposed in the access network device. The access network device is, for example, a base station. The method includes: receiving first data from a terminal device on a first resource, and starting a first timer, where the first resource is a preconfigured resource, the first data is small data, and the terminal device is in an RRC non-connected state; and skipping sending first information and second information to the terminal device, where the second information is used to schedule a retransmission resource, the first information is information indicating that the first data is successfully transmitted, and the first information is MAC layer information, or the first information is information for scheduling a resource.

According to an eighth aspect, a communication apparatus is provided. The communication apparatus may be the terminal device according to any one of the first aspect to the seventh aspect. The communication apparatus has a function of the terminal device. The communication apparatus is, for example, the terminal device, or a functional module in the terminal device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

In an optional implementation, the communication apparatus further includes a storage unit. The processing unit is configured to: be coupled to the storage unit, and execute a program or instructions in the storage unit, to enable the communication apparatus to perform the function of the terminal device according to any one of the first aspect to the seventh aspect.

According to a ninth aspect, a communication apparatus is provided. The communication apparatus may be the access network device according to any one of the first aspect to the seventh aspect. The communication apparatus has a function of the access network device. The communication apparatus is, for example, the access network device, or a functional module in the access network device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the description of the eighth aspect.

In an optional implementation, the communication apparatus further includes a storage unit. The processing unit is configured to: be coupled to the storage unit, and execute a program or instructions in the storage unit, to enable the communication apparatus to perform the function of the access network device according to any one of the first aspect to the seventh aspect.

According to a tenth aspect, a computer-readable storage medium is provided. The computer-readable storage medium is configured to store a computer program or instructions. When the computer program or the instructions is/are run, the method performed by the terminal device or the access network device in the foregoing aspects is implemented.

According to an eleventh aspect, a computer program product including instructions is provided. When the computer program product runs on a computer, the method in the foregoing aspects is implemented.

According to a twelfth aspect, an apparatus is provided, including one or more units configured to perform the method according to any embodiment of this application.

According to a thirteenth aspect, a communication system is provided, including the communication apparatus according to the eighth aspect and the communication apparatus according to the ninth aspect.

### BRIEF DESCRIPTION OF DRAWINGS

FIG. 1 is a schematic diagram of transition between RRC states;
FIG. 2 is a schematic diagram of SDT RBs and a non-SDT RB;
FIG. 3 is a schematic diagram of periodic CG-SDT resources;
FIG. 4 is a schematic diagram of a network architecture to which an embodiment of this application is applied;
FIG. 5 is a flowchart of a first communication method according to an embodiment of this application;
FIG. 6A and FIG. 6B are two schematic diagrams of MAC subheaders according to embodiments of this application;
FIG. 7 is a flowchart of a second communication method according to an embodiment of this application;
FIG. 8 is a schematic diagram of an apparatus according to an embodiment of this application; and
FIG. 9 is a schematic diagram of another apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The following describes some terms or concepts in embodiments of this application, to facilitate understanding by a person skilled in the art.

In embodiments of this application, a terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (telemedicine, or remote medical), a smart grid (smart grid), smart furniture, smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like. For ease of description, in embodiments of this application, an example in which the terminal device is the UE is used for description.

A network device in embodiments of this application may include, for example, an access network device and/or a core network device. The access network device is a device with a wireless transceiver function, and is configured to communicate with the terminal device. The access network device includes but is not limited to a base station (base transceiver station (base transceiver station, BTS), NodeB, eNodeB/eNB, or gNodeB/gNB), a transmission reception point (transmission reception point, TRP), a base station evolved after the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, a network device in the vehicle-to-everything (vehicle-to-everything, V2X) technology may be a road side unit (road side unit, RSU). The following uses an example in which the access network device is the base station for description. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

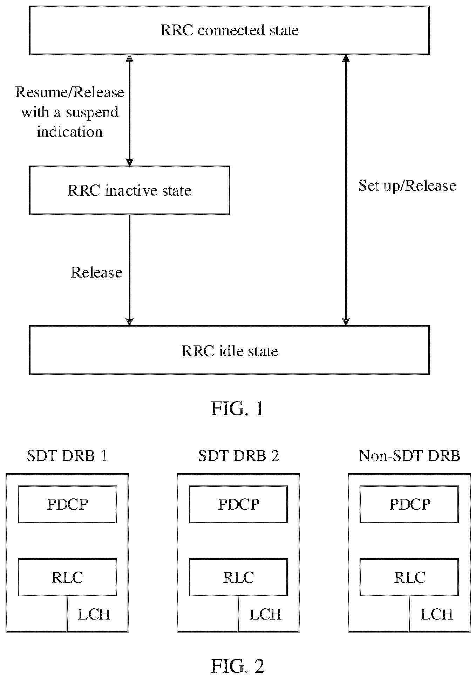

Currently, the UE has three RRC states in total: RRC_IDLE (IDLE) state, RRC_INACTIVE state, and RRC_CONNECTED (CONNECTED) state. If the UE has set up an RRC connection, the UE is in the RRC connected state or RRC inactive state. If the UE has not set up an RRC connection, the UE is in the RRC idle state. The RRC inactive state is introduced for the UE in 5G NR, and this RRC state is mainly for a case in which "UE that has infrequent (infrequent) data transmissions is usually kept in the RRC inactive state by a network". Operations performed for the UE vary according to RRC states. FIG. 1 is a schematic diagram of transition between the three RRC states. When the UE is in the RRC idle state, if the UE needs to transmit data, the UE may initiate an RRC connection setup process to enter the RRC connected state. If the UE in the RRC connected state does not need to transmit data, the base station may release the RRC connection for the UE, so that the UE enters the RRC idle state or the RRC inactive state. If the base station sends a release (release) message with a pause indication, for example, an RRC release with a suspend indication (RRCRelease with suspend indication) message, the UE enters the RRC inactive state. If the base station sends a release message, for example, an RRC release message, the UE enters the RRC idle state. In addition, the UE in the RRC inactive state may also return to the RRC connected state by using an RRC connection resume (resume) process, or the base station may release RRC connection for the UE, so that the UE enters the RRC idle state from the RRC inactive state.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, a first signal strength threshold and a second signal strength threshold may be a same signal strength threshold, or may be different signal strength thresholds. In addition, the names do not indicate that the two signal strength thresholds have different values, application scenarios, priorities, or importance levels. In addition, step numbers in embodiments described in this application are merely used to distinguish between different steps, but are not used to limit a sequence of the steps. For example, S501 may be performed before S502, or may be performed after S502, or may be performed at the same time with S502.

It can be learned from the foregoing different RRC states that the UE in the RRC inactive state does not support data transmission, in other words, the UE can transmit data only after the UE resumes the RRC connection to enter the RRC connected state. However, in some scenarios, a data packet that needs to be transmitted by the UE in the RRC inactive state is usually very small. In other words, the UE needs to transmit only small data (small data), for example, smartphone related services such as instant messages, heartbeat packets, or push messages of some applications (APPs), or non-smartphone-related services such as periodic data (for example, a heartbeat packet) of a wearable device, or periodic readings (for example, a reading of a smart meter) sent by an industrial wireless sensor network. In this case, signaling overheads required for the UE to enter the RRC connected state from the RRC inactive state may even be greater than transmission overheads of the small data, resulting in unnecessary power consumption and signaling overheads.

Current SDT solutions mainly include a random-access-based SDT (RA-SDT) solution and a CG-based SDT (namely, CG-SDT) solution. Considering different application scenarios of SDT, the two SDT solutions are both used as SDT mechanisms. For example, a random access configuration, including an RA-SDT configuration, may be provided by using common control signaling (namely, system information) sent by the base station. Whenever the UE reselects a new cell, the UE may read and apply the configuration provided by the signaling. For another example, a CG-SDT configuration is delivered by the base station to the UE by using dedicated control signaling. Therefore, a CG-SDT configuration provided in one cell cannot be reused by UE in another cell. Therefore, based on different characteristics and use conditions of RA-SDT and CG-SDT, the UE may use different SDT modes in different application scenarios. Because a transmission resource for CG-SDT may be configured by the base station for the UE by using the dedicated control signaling, some transmission-related parameters may alternatively be adaptively adjusted based on the UE. For example, a modulation and coding scheme (modulation and coding scheme, MCS), and parameters related to a physical layer (PHY) (for example, a parameter related to a physical uplink shared channel (physical uplink shared channel, PUSCH)) may be adjusted to a wireless condition applicable to the UE. Therefore, CG-SDT is considered to be more valid than RA-SDT. When both RA-SDT and CG-SDT are available, the UE may preferentially use CG-SDT to transmit small data.

Currently, no matter whether CG-SDT or RA-SDT, the UE may not initiate an SDT procedure when all data arrives. The base station needs to first configure, for the UE, radio bearers (radio bearers, RBs) that can be used to transmit SDT data, including a data radio bearer (data radio bearer, DRB) and a signaling radio bearer (signaling radio bearer, SRB). These RBs may be referred to as SDT RBs, and only data on an SDT RB can be transmitted through the SDT procedure. If data arrives on a non (non)-SDT RB, the UE cannot initiate the SDT procedure. Each RB includes a packet data convergence protocol (packet data convergence protocol, PDCP), radio link control (radio link control, RLC), and a logical channel (logical channel, LCH). The RB is mainly used to carry data or signaling in a data transmission process. Refer to FIG. 2. Both an SDT DRB 1 and an SDT DRB 2 are SDT RBs, and a DRB 3 is a non-SDT RB. If data arrives on the SDT DRB 1 and/or the SDT DRB 2, the UE can initiate the SDT procedure, but cannot initiate the SDT procedure if data arrives on the DRB 3.

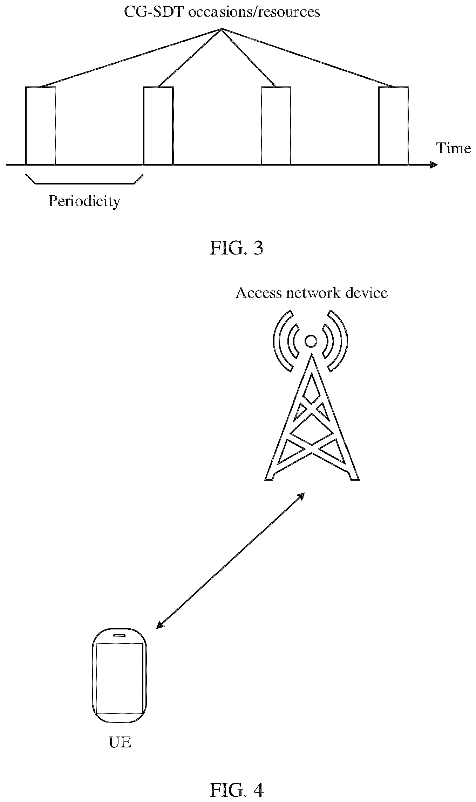

In NR, the base station may allocate a CG resource to the UE in the RRC connected state, so that the UE may send uplink data by using the CG resource when having a data transmission requirement. For example, the base station may configure the CG resource for the UE by using an RRC message. The RRC message may be used to configure a time-frequency location of the CG resource, a periodicity of the CG resource, and the like. Therefore, different from dynamic resource scheduling, CG resource pre-configuring can reduce signaling overheads and a data delay. A process in which the base station configures a CG-SDT resource for the UE is similar to a process in which the UE configures the CG resource. A difference lies in that the CG-SDT resource is used by the UE in the RRC inactive state to perform small data transmission. FIG. 3 is a schematic diagram of periodic CG-SDT resources configured by a base station. A time domain location of each CG-SDT resource may be considered as a CG-SDT occasion (occasion).

Each time after sending uplink small data on the CG-SDT resource, the UE needs to learn whether the uplink small data is successfully sent. If the uplink small data is not successfully transmitted, the UE may need to retransmit the uplink small data. Currently, there is no solution about how the UE in CG-SDT determines whether the uplink small data is successfully sent.

In view of this, the technical solutions in embodiments of this application are provided. In embodiments of this application, UE may start a first timer after sending first data. If first information is received before the first timer expires, the first timer is stopped. In this case, the UE may determine that the first data is successfully sent. "Before the first timer expires" may be understood as follows: The first timer is running. For example, that first information is received before the first timer expires may be understood as follows: The first information is received when the first timer is running. A mechanism for determining, by using the first timer, whether the data is successfully sent is provided, and implementation is simple. If the first information is, for example, the MAC layer information, feedback information at a physical layer does not need to be introduced. This reduces impact on the physical layer, and enables solutions in embodiments of this application to be more easily compatible with the conventional technology. Alternatively, the first information is, for example, information for scheduling a resource, and the information for scheduling a resource is currently defined existing information. Using the information for scheduling a resource as the first information can reduce impact on a current protocol without introducing new information.

The technical solutions provided in embodiments of this application may be applied to a 4th generation mobile communication technology (4th generation, 4G) system, for example, a long term evolution (long term evolution, LTE) system, or may be applied to the 5G system, for example, a new radio (new radio, NR) system, or may be applied to a next-generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to the vehicle-to-everything (vehicle-to-everything, V2X) scenario, for example, an NR-V2X scenario. For example, the technical solutions provided in embodiments of this application may be applied to the internet of vehicles, for example, V2X or vehicle-to-vehicle (vehicle-to-vehicle, V2V), or may be applied to fields such as intelligent driving, assisted driving, or an intelligent connected vehicle. If the technical solutions provided in embodiments of this application are applied to the D2D scenario, both communication parties may be UEs. If the technical solutions provided in embodiments of this application are applied to a non-D2D scenario, one party of communication may be UE, and the other party may be a network device (for example, an access network device or a core network device), or both communication parties may be network devices. In the following description process, an example in which both the communication parties are the UE and the access network device is used.

FIG. 4 shows a communication network architecture according to an embodiment of this application. All subsequently provided embodiments are applicable to the architecture. An access network device can communicate with UE. For descriptions of the access network device and the UE, refer to the foregoing descriptions.

To better describe embodiments of this application, the following describes methods provided in embodiments of this application with reference to the accompanying drawings. In the accompanying drawings corresponding to embodiments of this application, all optional steps are represented by dashed lines.

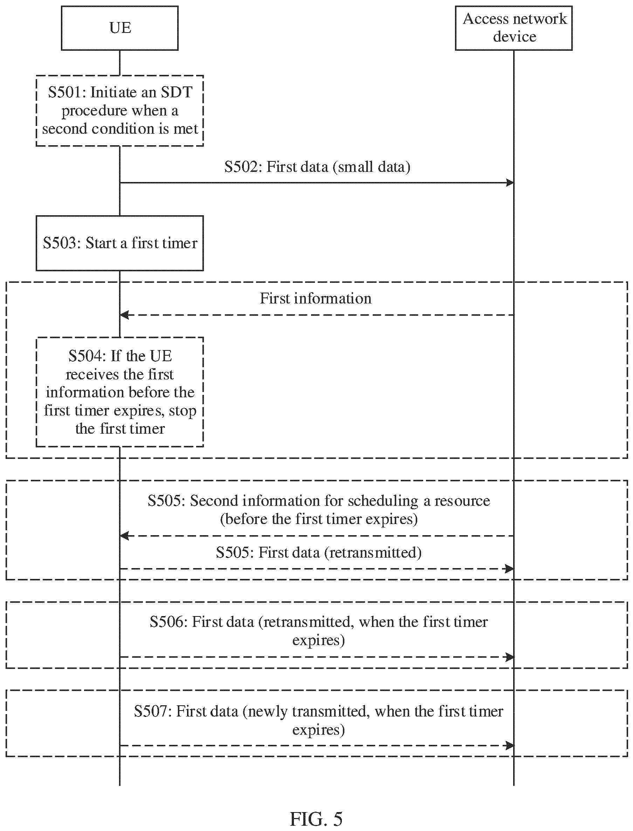

An embodiment of this application provides a first communication method. FIG. 5 is a flowchart of the method. The method may be applied to the network architecture shown in FIG. 4. For example, UE in the method is the UE in FIG. 4, and an access network device in the method is the access network device in FIG. 4.

S501: The UE initiates an SDT procedure when a second condition is met. Optionally, in this case, the UE is in an RRC non-connected state, and the RRC non-connected state is, for example, a RRC inactive state. Alternatively, if the UE can also initiate the SDT procedure when being in an RRC idle state, the RRC non-connected state may also be the RRC idle state. In this embodiment of this application, an example in which the UE is in the RRC inactive state is used. The second condition is a condition for initiating SDT. The SDT procedure in this embodiment of this application is, for example, a CG-SDT procedure or an RA-SDT procedure.

For SDT, when both the access network device and the UE support SDT and the UE meets a condition for initiating SDT, the UE may initiate the SDT procedure. For example, for CG-SDT, when both the access network device and the UE support CG-SDT, and the UE meets a condition for initiating CG-SDT, the UE may transmit uplink small data by using a preconfigured CG-SDT resource. If the UE performs SDT, the UE does not need to perform a random access process to send the small data. For example, the UE does not need to initiate an RRC connection resume process to enter an RRC connected state and then transmit the small data. This improves a success rate of small data transmission, and reduces signaling overheads.

The CG-SDT procedure is used as an example. The second condition may include one or more of a condition 1, a condition 2, a condition 3, a condition 4, a condition 5, or a condition 6. The following separately describes these conditions.

The condition 1 is that the UE has a CG-SDT resource configured by an access network device, the UE is in a coverage area of the access network device, and this access network device and the access network device that configures the CG-SDT resource for the UE are the same access network device.

The condition 2 is that a size of a current to-be-transmitted data packet of the UE meets a small data threshold. For example, the size of the to-be-transmitted data packet is less than or equal to the small data threshold.

The condition 3 is that a value of current reference signal received power (reference signal received power, RSRP) of the UE is greater than or equal to a preset first RSRP threshold (which is briefly referred to RSRP 1). For example, the RSRP 1 is RSRP used by the UE to determine that SDT can be initiated. If the current RSRP of the UE is greater than or equal to the RSRP 1, it indicates that the UE is close to the access network device and channel quality is good. If CG-SDT is performed, the success rate is high. If the current RSRP of the UE is less than the RSRP 1, it indicates that the UE is far away from the access network device and channel quality is poor. If CG-SDT is performed, the success rate is low. The RSRP 1 may be configured by the access network device for both CG-SDT and RA-SDT. For example, the access network device may configure the RSRP 1 by using a broadcast message.

The condition 4 is that a timing advance timer (timing advance timer, TAT) is running, for example, a TAT used for CG-SDT is running, in other words, a TA of the UE is valid. If the TA of the UE is valid, it indicates that the UE and the access network device are in an uplink synchronization state, and CG-SDT is valid. Otherwise, CG-SDT is invalid.

The condition 5 is that after previous uplink transmission, an increase or decrease of RSRP of the UE is less than or equal to a preset second RSRP threshold (which is briefly referred to RSRP 2). If the condition 5 is met, it may be considered that CG-SDT is valid. For example, whether the UE moves may be determined based on the increase or decrease of the RSRP of the UE. If the increase or decrease of the RSRP is greater than or equal to the RSRP 2, it indicates that the UE moves or moves over a large distance from a location where the previous uplink transmission is performed. If CG-SDT is performed, the success rate is low. In this case, it is considered that CG-SDT is invalid. If the increase or decrease of the RSRP is less than or equal to the RSRP 2, it indicates that the UE does not move or move over a small distance from the location where the previous uplink transmission is performed. If the CG-SDT is performed, the success rate is high. In this case, it is considered that CG-SDT is valid. The previous uplink transmission may alternatively be transmission in the SDT procedure, for example, CG-SDT or RA-SDT, or the previous uplink transmission may alternatively be transmission for the UE in the RRC connected state.

The condition 6 is that a carrier selected by the UE has a CG-SDT resource. In a carrier selection process, the UE may select a supplementary uplink (supplementary uplink, SUL) or a normal uplink (normal uplink, NUL). For example, if the UE selects a carrier, and the carrier has a CG-SDT resource, it is considered that the condition 6 is met.

Optionally, if the UE performs the CG-SDT procedure, before the UE initiates the CG-SDT procedure, before S501, or before the UE enters the RRC inactive state from the RRC connected state, the access network device may send a message to the UE, where the message is used to configure the CG-SDT resource for the UE. Based on the CG-SDT resource configured by the access network device, when the UE is in the RRC inactive state, if small data arrives and the second condition is met, the CG-SDT procedure may be initiated, and the CG-SDT resource is used to transmit the small data. For example, when the UE is in the RRC connected state, the UE may send a request message to the access network device, where the request message is used to request to configure the CG-SDT resource. After receiving the request message, the access network device may send the message to the UE to configure the CG-SDT resource. For example, in an LTE system, the UE may send a preconfigured uplink resource configuration request (PURConfigurationRequest) to the access network device. When the access network device switches the UE to the RRC idle state, the access network device may include preconfigured uplink resource (preconfigured uplink resource, PUR) configuration information in an RRC connection release (RRCConnectionRelease) message sent to the UE, to configure a PUR resource, or include PUR release indication information in an RRC connection release message, to release a configured PUR resource. For another example, in an NR system, when the UE is in the RRC connected state, the UE may send a CG-SDT resource request message to the access network device, where the CG-SDT resource request message is used to request to obtain the CG-SDT resource. When the access network device switches the UE to the RRC inactive state, the access network device may include CG-SDT configuration information in an RRC release (RRCRelease) message sent to the UE, to configure the CG-SDT resource, or include CG-SDT release indication information in an RRC release message, to release a configured CG-SDT resource. Alternatively, the UE does not send, to the access network device, a message for requesting to configure the CG-SDT resource (for example, the UE does not send the CG-SDT resource request message). The access network device may actively configure the CG-SDT resource for the UE. For example, the access network device may include the CG-SDT configuration information in the RRC release message.

The UE may alternatively initiate the SDT procedure in another manner. Therefore, S501 is an optional step.

S502: The UE sends first data to the access network device. Correspondingly, the access network device receives the first data from the UE.

Optionally, the UE may send the first data to the access network device on a first resource. Correspondingly, the access network device also receives the first data from the UE on the first resource. If the UE performs the CG-SDT procedure, optionally, the first resource is a preconfigured resource, for example, the CG-SDT resource preconfigured by the access network device for the UE, and the first data is small data. The first data may be understood as a first data packet. Alternatively, it may be understood that the first data is included in the first data packet. If the UE performs the RA-SDT procedure, optionally, the first resource is a contention-based random access resource. For example, in a four-step (4-step) random access process, the first resource is a resource for sending a third message (Msg3) in the random access process, and the first data may be included in the Msg3. Alternatively, in a two-step (2-step) random access process, the first resource is a resource for sending a message A (MsgA) in the random access process, and the first data may be included in the MsgA.

Alternatively, S501 and S502 may be alternatively replaced with: When the second condition is met, the UE sends the first data to the access network device on the first resource. Correspondingly, the access network device receives the first data from the UE on the first resource. In other words, the UE may not initiate an SDT operation, but start to perform SDT.

In this embodiment of this application, the SDT procedure performed by the UE may be a CG-SDT procedure, or may be an RA-SDT procedure. When the CG-SDT procedure is performed, that the UE sends the small data to the access network device may include different phases, and information sent by the UE may be different. Description is provided below.

In the CG-SDT procedure, that the UE sends the small data to the access network device may be divided into two phases. One is an initial transmission (initial transmission) phase, or is referred to as an initial phase (initial phase). If the UE cannot transmit all the to-be-transmitted small data by using the currently available CG-SDT resource in the initial transmission phase because the CG-SDT resource cannot accommodate all to-be-transmitted small data in size, the UE needs to continue to send subsequent small data after the initial transmission phase ends, and this phase may be referred to as a subsequent transmission (subsequent transmission) phase of CG-SDT. A scenario in which the subsequent transmission phase exists may include: 1. If the UE cannot complete transmission of all the to-be-transmitted small data at a time, the UE may segment the to-be-transmitted small data, to continue to send the small data in the subsequent transmission phase. 2. After the UE sends current small data, if new small data arrives, the UE continues to send the new small data in the subsequent transmission phase. It should be noted that, the UE may determine whether the foregoing condition 2 is met before the initial transmission phase starts. For example, before the initial transmission phase starts, the UE determines whether a total amount of all current to-be-transmitted data meets the small data threshold. If the new small data arrives after the UE sends the current small data, the new small data may be excluded from determining of the condition 2, and the UE only needs to send the new small data in the subsequent transmission phase.

In the initial transmission phase, in addition to sending the small data to the access network device, the UE may further send an RRC request message to the access network device. Generally, a process in which the UE sends first piece of data (or a 1st data packet) to the access network device belongs to the initial transmission phase. When sending the first piece of data to the access network device, the UE may further send the RRC request message to the access network device. For example, it is understood that a data packet including the RRC request message is the 1st data packet or a 1st small data packet. A data packet excluding the RRC request message is not the 1st data packet or is not the 1st small data packet, or is a data packet or a small data packet sent by the UE in the subsequent transmission phase. The RRC request message is transmitted on a common control channel (common control channel, CCCH). The RRC request message sent by the UE may be used for authentication or the like on the UE. The RRC request message may include an identifier of the UE, for example, include an inactive radio network temporary identity (inactive radio network temporary identity, I-RNTI) of the UE, or include a unique identity of the UE in a core network. In addition, the RRC request message may further include related information of an access network device to which the UE is previously connected. In addition, the RRC request message may further include related information used in processes such as encryption and/or integrity protection. In some implementations, RRC request messages may vary according to RRC states or service scenarios of the UE. For example, if the UE is in the RRC idle state (optionally, in this case, the UE may store a UE context such as configuration information for obtaining a key for encrypting the uplink small data, or the UE may not store a UE context), the RRC request message sent by the UE may be an RRC connection request (RRCConnectionRequest) message, an RRC connection resume request (RRCConnectionResumeRequest) message, an RRC early data request (RRCEarlyDataRequest) message, an RRC resume request (RRCResumeRequest) message, an RRCResumeRequest1 message, an RRC setup request (RRCSetupRequest) message, or another RRC message that has a same function but is not standardized by the 3rd generation partnership project (3rd generation partnership project, 3GPP). If the UE is in the RRC inactive state, the RRC request message sent by the UE may be an RRCEarlyDataRequest message, an RRCResumeRequest message, an RRCResumeRequest1 message, an RRCSetupRequest message, or another RRC message that has a same function but is not standardized by the 3GPP.

Alternatively, the UE may send only the small data without sending the RRC request message in the initial transmission phase. For example, if the CG-SDT resource is valid only in a current cell, and the CG-SDT resource configured by the access network device is a non-shared resource specific to the UE, when the UE sends the small data on the CG-SDT resource, the access network device can learn of specific UE that currently sends the small data. Therefore, the UE does not need to send the RRC request message.

In the subsequent transmission phase, the UE may send only the small data, and does not need to send the RRC request message. In the subsequent transmission phase, the UE may continue to send the small data on the CG-SDT resource preconfigured by the access network device, or the access network device may schedule an uplink resource for the UE in a dynamic scheduling manner. The UE can send the small data on the dynamically scheduled uplink resource. It should be noted that the UE needs to proceed with the subsequent transmission after the initial transmission succeeds.

It can be learned from the foregoing descriptions that, if the UE performs the CG-SDT procedure, and the first data (or the data packet in which the first data is included) is not the first piece of data sent by the UE to the access network device in the CG-SDT procedure, for example, if the first data is data, other than the first piece of data, sent by the UE to the access network device in the CG-SDT procedure, the UE only needs to send the first data to the access network device. Alternatively, if the UE performs the CG-SDT procedure, and the first data is the first piece of data sent by the UE to the access network device in the CG-SDT procedure, optionally, in addition to sending the first data to the access network device on the first resource, the UE may further send the RRC request message, or the UE may send only the first data without sending the RRC request message. If the first data is not the first piece of data sent by the UE to the access network device in the CG-SDT procedure, before S502, the UE may further perform the initial transmission phase, in other words, the UE may also send the first piece of data in the CG-SDT procedure to the access network device.

In addition, before sending the first data, the UE may first store the first data in a first buffer (buffer), and then fetch the first data from the first buffer and send the first data when the first data needs to be sent. The first buffer includes, for example, a HARQ buffer and/or a non-HARQ buffer. The non-HARQ buffer is, for example, a buffer dedicated to the SDT procedure, and may also be referred to as an SDT buffer. The SDT procedure is, for example, the CG-SDT procedure or the RA-SDT procedure. For example, before sending the small data, the UE assembles the to-be-sent small data. For example, the UE does not send the RRC request message, but only sends the small data on a dedicated traffic channel (dedicated traffic channel, DTCH). In this case, the UE may multiplex the to-be-sent small data (for example, the first data) into a MAC protocol data unit (protocol data unit, PDU) in a multiplexing and assembly entity (multiplexing and assembly entity) at a MAC layer. Alternatively, the UE needs to send the RRC request message on the common control channel (common control channel, CCCH) and send the small data on a DTCH. In this case, the UE may multiplex the to-be-sent RRC request message and the to-be-sent small data (for example, the first data) into a MAC PDU in a multiplexing and assembly entity at a MAC layer. After obtaining the MAC PDU, the UE may store the MAC PDU in the first buffer.

S503: The UE starts a first timer. The first timer may be configured to detect information from the access network device, for example, detect a physical downlink control channel (physical downlink control channel, PDCCH). If the UE performs the CG-SDT procedure, optionally, the first timer is, for example, a CG retransmission timer (cg-retransmission timer), or may be a newly defined timer that has a function similar to that of the cg-retransmission timer. In this case, the UE may start the first timer after sending the first data. For example, the UE starts the first timer at a 1st valid PDCCH occasion after sending the first data. If the UE performs the RA-SDT procedure, optionally, the first timer is, for example, a contention resolution timer (contention resolution timer). In this case, the UE may start the first timer at a 1st symbol (symbol) after transmission of the first data ends.

For example, if the UE maintains one first timer for each hybrid automatic repeat request (hybrid automatic repeat request, HARQ) process (process), a quantity of first timers is equal to a quantity of HARQ processes. Alternatively, the UE may maintain only one first timer, and the first timer corresponds to all HARQ processes.

If the UE maintains one first timer for each HARQ process, the first timer started by the UE in S503 is a first timer corresponding to a HARQ process for sending the first data in S502. For example, the HARQ process for sending the first data is referred to as a first HARQ process. In addition, if the UE performs the CG-SDT procedure, the CG-SDT resource preconfigured by the access network device is also associated with a HARQ process, and different HARQ processes are associated with different CG-SDT resources. The first resource may be a resource associated with the first HARQ process.

After the first timer is started, different results may occur. The following describes different results by using different steps. The following four steps S504 to S507 are optional steps in parallel, in other words, there is an "or" relationship between the four steps.

S504: If the UE receives first information before the first timer expires, the UE stops the first timer. For example, if the UE receives the first information when the first timer is running, the UE stops the first timer. If the UE receives the first information before the first timer expires, it indicates that the access network device sends the first information to the UE before the first timer expires. For example, the access network device may also start the first timer when receiving the first data. If the first data is successfully received, the access network device may send the first information to the UE before the first timer expires.

If the UE receives the first information before the first timer expires, the UE considers that the first data is successfully transmitted. For example, the first information is information at a non-physical layer. For example, the first information is information at a layer (layer, L) 2, namely, media access control (media access control, MAC) layer information. Alternatively, the first information may be information at a protocol layer other than a physical layer. In embodiments of this application, an example in which the first information is the MAC layer information is used. Optionally, as long as the UE receives the first information before the first timer expires, it is considered that the first data is successfully transmitted. Therefore, it may be considered that the first information implicitly indicates that the first data is successfully transmitted, or it may be considered that the first information does not indicate that the first data is successfully transmitted. Alternatively, the first information may explicitly indicate that the first data is successfully transmitted. Because the UE can determine, based on the first information, that the first data is successfully transmitted, the first information may also be referred to as L2 acknowledgment (ACK) information, or may have another name. Because the first information is the information at the non-physical layer, feedback information at the physical layer does not need to be introduced in this embodiment of this application. This reduces impact on the physical layer, and enables the solutions in embodiments of this application to be more easily compatible with the conventional technology.

If the first information is the MAC layer information, the first information may have different implementations, as described in the following examples.

In a first optional implementation of the MAC layer information used as the first information, the MAC layer information is a MAC subheader (subheader), for example, referred to as a first MAC subheader. A value of a logical channel identifier (logical channel ID, LCID) included in the first MAC subheader is a first value. If the value of the LCID is the first value, it may indicate that the first data is successfully transmitted. In other words, if the value of the LCID is the first value, it may indicate that the small data sent by the UE is successfully transmitted. Therefore, when receiving the first information, the UE may determine that the first data is successfully transmitted. In this implementation, the first MAC subheader explicitly indicates that the first data is successfully transmitted based on a fact that the value of the LCID is the first value. In this case, a length of a MAC control element (control element, CE) corresponding to the first MAC subheader is 0. In other words, when receiving the first MAC subheader, the UE considers that the first data is successfully transmitted.

Optionally, the MAC CE corresponding to the first MAC subheader may further include time indication information. The time indication information may also be referred to as a timing advance command or the like. The timing advance command is, for example, a timing advance command MAC CE (timing advance command MAC CE). The timing advance command may be used to update a TA. After receiving the timing advance command, the UE may update the TA according to the timing advance command.

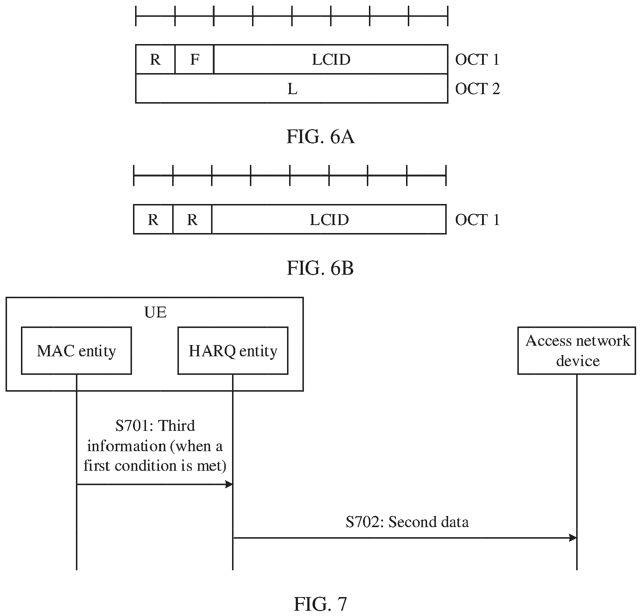

FIG. 6A and FIG. 6B are schematic diagrams of two formats of MAC subheaders. Each of the MAC subheaders may be used as the first MAC subheader, and may also be used as a third MAC subheader to be described below. FIG. 6A shows a MAC subheader corresponding to a MAC CE with a non-fixed length, and FIG. 6B shows a MAC subheader corresponding to a MAC CE with a fixed length. A top grid in each of FIG. 6A and FIG. 6B indicates a bit (bit), and each grid represents 1 bit, and OCT indicates byte alignment, where each byte includes 8 bits. In each of FIG. 6A and FIG. 6B, a field R indicates a reserved (reserved) bit, and an LCID may indicate a type of the MAC CE corresponding to the MAC subheader, in other words, an LCID may indicate a function of the MAC CE. In FIG. 6A, a value of a field L may indicate a length of the MAC CE corresponding to the MAC subheader. A value of a field F may indicate a length of the field L. For example, if the value of the field F is "1", it indicates that the length of the field L is 16 bits. If the value of the field F is "0", it indicates that the length of the field L is 8 bits.

In the first optional implementation of the MAC layer information, only the MAC subheader is used. Therefore, optionally, it may be considered that the MAC CE occupies 0 bits. Alternatively, in the first optional implementation, the first MAC subheader may be replaced with other MAC layer information, for example, a MAC CE.

In a second optional implementation of the MAC layer information used as the first information, the MAC layer information is a MAC CE, and the MAC CE may indicate that the first data is successfully transmitted. For example, the MAC CE includes a first identifier, and the first identifier is an identifier of the first HARQ process (for example, a HARQ process ID of the first HARQ process). For example, the MAC CE occupies 8 bits in total. If a quantity of HARQ processes available to the UE is 16, 4 bits in the MAC CE may be used to indicate the HARQ process ID. In this case, the other 4 bits in the MAC CE are reserved bits. For another example, if a quantity of HARQ processes available to the UE is 32, 5 bits in the MAC CE may be used to indicate the HARQ process ID. In this case, the other 3 bits in the MAC CE are reserved bits. If the UE receives the MAC CE, the UE can determine, based on the first identifier included in the MAC CE, that the small data in the first HARQ process is successfully transmitted, in other words, determine that the first data is successfully transmitted. Optionally, the MAC CE is a new MAC CE defined in this embodiment of this application. For example, a value of an LCID in a second MAC subheader corresponding to the MAC CE is a second value. The UE can determine, based on a fact that the value of the LCID is the second value, that the MAC CE is a MAC CE used as the first information. The second value may be the same as or different from the first value. In this implementation, the MAC CE explicitly indicates, by using the first identifier, that the data in the first HARQ process is successfully transmitted.

Optionally, the MAC CE may indicate that at least one piece of data is successfully transmitted. For example, the MAC CE includes at least one identifier, and each identifier is an identifier of a HARQ process. This is equivalent to that the MAC CE may indicate at least one HARQ process, or indicate data transmitted in at least one HARQ process. For example, one of the at least one identifier is the first identifier. Bytes of the MAC CE are aligned, and each byte includes 8 bits. For example, the MAC CE indicates that data in only one HARQ process is successfully transmitted (for example, indicates that the first data is successfully transmitted). If the quantity of HARQ processes available to the UE is 16, the 4 bits in the MAC CE may indicate or carry the HARQ process ID. In this case, the other 4 bits in the MAC CE are reserved bits or invalid bits, or are 0. Alternatively, if the quantity of HARQ processes available to the UE is 32, the 5 bits in the MAC CE may be used to indicate the HARQ process ID. In this case, the other 3 bits in the MAC CE are reserved bits or invalid bits, or are 0. For another example, the MAC CE may indicate that a plurality of pieces of data are successfully transmitted (for example, the plurality of pieces of data are transmitted in a plurality of HARQ processes, and the first data is one of the plurality of pieces of data). If the quantity of HARQ processes available to the UE is 16, each HARQ process ID occupies 4 bits. In this case, a plurality of first identifiers may be arranged in sequence, each byte may indicate two first identifiers, and a remaining bit in the MAC CE may be a reserved bit or an invalid bit, or is 0. Alternatively, if the quantity of HARQ processes available to the UE is 32, each HARQ process ID occupies 5 bits. In this case, a plurality of first identifiers may be arranged in sequence, and a remaining bit in the MAC CE may be a reserved bit or an invalid bit, or is 0. Optionally, the MAC CE is a new MAC CE defined in this embodiment of this application. For example, a value of an LCID in a second MAC subheader corresponding to the MAC CE is a second value. The UE can determine, based on a fact that the value of the LCID is the second value, that the MAC CE is a MAC CE used as the first information. The second value may be the same as or different from the first value. The MAC CE may indicate one or more first identifiers, that is, a length of the MAC CE is a non-fixed length. Therefore, the MAC CE may correspond to the MAC subheader in FIG. 6A. In this implementation, the MAC CE explicitly indicates, by using the first identifier, that the data in the first HARQ process is successfully transmitted.

Optionally, the MAC CE may indicate that at least one piece of data is successfully transmitted. For example, the bytes of the MAC CE are aligned, each byte includes 8 bits, the MAC CE includes a bitmap (bitmap), and each bit of the bitmap corresponds to one HARQ process ID. If a value of a bit included in the bitmap is 1, it indicates that the MAC CE indicates that data corresponding to a HARQ process ID corresponding to the bit is successfully transmitted. If a value of a bit is 1, it indicates that the MAC CE does not indicate that data corresponding to a HARQ process ID corresponding to the bit is successfully transmitted. For example, if the quantity of HARQ processes available to the UE is 16, the MAC CE may include 16 bits, and each bit corresponds to one HARQ process. Alternatively, if the quantity of HARQ processes available to the UE is 32, the MAC CE may include 32 bits, and each bit corresponds to one HARQ process. Optionally, the MAC CE is a new MAC CE defined in this embodiment of this application. For example, a value of an LCID in a second MAC subheader corresponding to the MAC CE is a second value. The UE can determine, based on a fact that the value of the LCID is the second value, that the MAC CE is a MAC CE used as the first information. The second value may be the same as or different from the first value. A bit in the MAC CE one-to-one corresponds to a HARQ process, that is, a length of the MAC CE is a fixed length. Therefore, the MAC CE may correspond to the MAC subheader in FIG. 6B. In this implementation, the MAC CE explicitly indicates, by using the first identifier, that the data in the first HARQ process is successfully transmitted.

Optionally, the MAC CE may further include time indication information. The time indication information may also be referred to as a timing advance command or the like. The timing advance command is, for example, a timing advance command MAC CE. The timing advance command may be used to update a TA. After receiving the timing advance command, the UE may update the TA according to the timing advance command.

Optionally, in the second optional implementation, the MAC CE may be replaced with other MAC layer information, for example, a MAC subheader.

In a third optional implementation of the MAC layer information used as the first information, the first information is a MAC subheader, for example, referred to as a third MAC subheader. The UE receives the first information within first duration after sending the first data, and the first duration corresponds to the first HARQ process. In this case, the first information indicates that the data in the HARQ process corresponding to the first information is successfully transmitted. In this implementation, transmission duration of the first information is associated with the HARQ process. For example, if the first information corresponds to a HARQ process 1, the first information needs to be sent within duration 1. For the UE, if the first information is received within the duration 1, it is considered that small data in the HARQ process 1 is successfully transmitted. If the first information corresponds to a HARQ process 2, the first information needs to be sent within duration 2. For the UE, if the first information is received within the duration 2, it is considered that small data in the HARQ process 2 is successfully transmitted. The rest may be deduced by analogy. To prevent the UE from confusing first information corresponding to different HARQ processes, the access network device may send the first information based on transmission duration of the first information as much as possible. For example, transmission duration of first information corresponding to the HARQ process 1 is 1 ms, and transmission duration of first information corresponding to the HARQ process 2 is 2 ms. In this case, if the access network device sends the first information corresponding to the HARQ process 2, the access network device may try to send the first information when 2 ms is about to arrive. In this way, the UE receives the first information corresponding to the HARQ process 2 as much as possible when 2 ms is about to arrive, to prevent the UE from confusing the first information corresponding to the two HARQ processes. Transmission duration of first information corresponding to each HARQ process needs to be less than or equal to timing duration of the first timer. In this implementation, the MAC subheader does not need to include additional information, and the access network device only needs to send the first information within corresponding duration. An implementation is simple. In this implementation, the third MAC subheader explicitly indicates, by using the transmission duration, that the first data is successfully transmitted. Alternatively, it may be considered that the third MAC subheader implicitly indicates, by using the transmission duration, that the first data is successfully transmitted.

In the third optional implementation of the MAC layer information, only the MAC subheader is used. Therefore, optionally, it may be considered that the MAC CE occupies 0 bits. Alternatively, in the third optional implementation, the third MAC subheader may be replaced with other MAC layer information, for example, a MAC CE.

In addition, optionally, a value of an LCID included in the third MAC subheader is a third value. If the value of the LCID is the third value, it may indicate that the third MAC subheader is a MAC subheader used as the first information. The UE can determine, based on the value of the LCID and receiving time of the third MAC subheader, a HARQ process corresponding to the third MAC subheader. The first value, the second value, and the third value may all be the same or different, or any two of the first value, the second value, and the third value are the same and the other one is different.

Optionally, a MAC CE corresponding to the third MAC subheader may further include time indication information. The time indication information may also be referred to as a timing advance command or the like. The timing advance command is, for example, a timing advance command MAC CE (timing advance command MAC CE). The timing advance command may be used to update a TA. After receiving the timing advance command, the UE may update the TA according to the timing advance command.

In the initial transmission phase, even if transmission fails, during retransmission, the UE still uses a HARQ process same as a HARQ process used in new transmission. Therefore, it may be understood that in the initial transmission phase, the UE uses only one HARQ process. However, the subsequent transmission phase may involve new transmission of the plurality of pieces of data. Therefore, the UE may enable another HARQ process. Therefore, in the subsequent transmission phase, the UE may use one or more HARQ processes. In the first optional implementation of the MAC layer information described above, the HARQ process is not distinguished. Therefore, the first optional implementation of the MAC layer is more applicable to the initial transmission phase. The second implementation or the third implementation of the MAC layer information described above is applicable to both the initial transmission phase and the subsequent transmission phase.

The foregoing several implementations in which the first information is implemented by using MAC layer information are more applicable to a case in which the UE performs the CG-SDT procedure. If the UE performs the RA-SDT procedure, and the first information is the MAC layer information, the MAC layer information is, for example, a MAC CE indicating that contention resolution succeeds. Optionally, as long as the UE receives the MAC CE before the first timer expires, it is considered that the first data is successfully transmitted. Therefore, it may be considered that the MAC CE implicitly indicates that the first data is successfully transmitted, or it may be considered that the MAC CE does not indicate that the first data is successfully transmitted. Alternatively, the MAC CE may explicitly indicate that the first data is successfully transmitted. For example, the MAC CE may include success indication information, and the UE can determine, based on the success indication information included in the MAC CE, that the first data is successfully transmitted.

The foregoing describes a case in which the first information may be the information at the non-physical layer. In addition, the first information may alternatively be implemented in another manner. For example, the first information may be information for scheduling a resource. In this case, a resource scheduled by using the first information may be a resource used for new data transmission. If the first information is the information for scheduling a resource, the first information is, for example, information at the physical layer. For example, the first information is a PDCCH, or it is understood that the first information is downlink control information (downlink control information, DCI) carried on the PDCCH. Alternatively, the first information may be other information for scheduling a resource. If the first information is the information for scheduling a resource, the first information may not directly indicate whether the first data is successfully transmitted. However, if the UE receives, from the access network device before the first timer expires, information for scheduling a new transmission resource, the UE may consider that the first data is successfully transmitted. Alternatively, even if the first information is the information for scheduling a resource, the first information may indicate that the first data is successfully transmitted. For example, the first information may include information indicating that the first data is successfully transmitted, so that the UE is more aware that the first data is successfully transmitted. If the UE performs RA-SDT, and the first information is the information for scheduling a resource, optionally, before sending the first information to the UE, the access network device may send, to the UE, a message indicating that contention resolution succeeds.

Optionally, the UE may clear the first buffer when resetting the MAC layer, when receiving the first information, when initiating the SDT procedure, or before sending newly transmitted small data in the initial transmission phase. Generally, if the small data of the UE is successfully sent, the access network device may send the first information to the UE, or may send the RRC release message to the UE. If the UE receives the first information or receives the RRC release message, the UE may reset the MAC layer. In this case, the UE may clear the first buffer for transmitting next small data in the current SDT procedure or for use in a next SDT procedure. However, when the first information is received, it indicates that previous small data is successfully transmitted. In this case, the UE may clear the first buffer for transmitting the next small data in the current SDT procedure or the next SDT procedure. Alternatively, the UE may clear the first buffer before initiating the SDT procedure or sending the newly transmitted small data. In other words, the UE may clear the first buffer before performing small data transmission for transmitting the current small data in the current SDT procedure.

S505: If the UE receives, before the first timer expires, second information for scheduling a retransmission resource, the UE retransmits the first data. For example, if the UE receives the second information for scheduling a retransmission resource when the first timer is running, the UE retransmits the first data. Correspondingly, the access network device receives retransmitted data of the first data. Optionally, the UE may retransmit the first data on a second resource, and the access network device may also receive the first data on the second resource.

If the UE receives the second information before the first timer expires, it indicates that the access network device sends the second information to the UE before the first timer expires. For example, the access network device may also start the first timer when receiving the first data. If the first data fails to be received, the access network device may send the second information to the UE before the first timer expires, to schedule a resource to retransmit the first data. The second resource is a resource scheduled by using the second information, and may be used to transmit small data. In other words, the second resource is an SDT resource. For example, the second resource is associated with the first HARQ process. This is equivalent to that the UE continues to retransmit the first data in the first HARQ process. For example, the second information is a PDCCH, or is understood as DCI carried on the PDCCH, or the second information may be other information for scheduling a resource.

If the second information is received before the first timer expires, the UE may obtain the first data from the first buffer, or obtain a MAC PDU including the first data. For example, the first buffer in this case is a HARQ buffer. After obtaining the first data from the first buffer, the UE retransmits the first data (or retransmits the MAC PDU including the first data) on the second resource.

Optionally, after retransmitting the first data, the UE may restart the first timer. In this case, the UE may restart the first timer after sending the first data. For example, the UE restarts the first timer at a 1st valid PDCCH occasion after sending the first data.

S506: If the first timer expires, the UE retransmits the first data. Correspondingly, the access network device receives the first data. Optionally, the UE may retransmit the first data on a third resource, and the access network device may also receive the first data on the third resource. S506 may also be understood as follows: If the UE does not receive information from the access network device when the first timer expires, the UE retransmits the first data on the third resource. Correspondingly, for the access network device, it may be understood that if the access network device does not send the information to the UE when the first timer expires, or if the access network device does not receive the first data on the first resource, the access network device may receive the first data on the third resource.

When the first timer expires, if the UE does not receive the information from the access network device ("not receive the information" herein mainly means that first information and second information are not received, and other information is not limited. In other words, in addition to the first information and the second information, the UE may receive the other information from the access network device, or may not receive the other information. However, as long as the first information and the second information are not received, it is considered that a condition for performing S506 is met), the UE considers that the first data fails to be transmitted. In this case, the UE may automatically retransmit the first data on the third resource, that is, in S506, it is considered that the UE performs an automatic retransmission mechanism. For example, the third resource is associated with the first HARQ process. This is equivalent to that the UE continues to retransmit the first data in the first HARQ process, to be specific, the UE performs HARQ retransmission of the first data. For example, the UE performs the CG-SDT procedure, and the third resource may be a resource (or a CG-SDT resource) preconfigured by the access network device and used to transmit small data. Alternatively, the UE performs the RA-SDT procedure, and the third resource may be a contention-based random access resource, for example, a resource for sending the Msg3.

If the UE does not receive the information from the access network device when the first timer expires, the UE may obtain the first data from the first buffer, in other words, obtain a MAC PDU including the first data. For example, the first buffer in this case is a HARQ buffer. After obtaining the first data from the first buffer, the UE retransmits the first data (or retransmits the MAC PDU including the first data) on the third resource.

Optionally, after retransmitting the first data, the UE may restart the first timer.

S505 and S506 both involve retransmission of the first data, and therefore involve moments at which the UE stops retransmission. A case in which the UE needs to stop retransmission is that the first data is successfully sent. For example, if the UE receives the first information, the UE may stop retransmission. In another case, for S506, if a maximum quantity of retransmission times is reached, even if the UE does not receive the first information, the UE stops retransmission. For example, the maximum quantity of retransmission times is configured by the access network device, for example, configured by using an RRCRelease message or a broadcast message. Alternatively, the maximum quantity of retransmission times is preconfigured in the UE, or may be predefined by using a protocol. The maximum quantity of retransmission times may include a quantity of new transmission times and a quantity of retransmission times, namely, the maximum quantity of retransmission times may be a sum of the quantity of new transmission times and the quantity of retransmission times. Alternatively, the maximum quantity of retransmission times may include only a quantity of retransmission times but not include a quantity of new transmission times. If the first data is not successfully transmitted when the maximum quantity of retransmission times is reached, optionally, the UE may enter the RRC inactive state (if the UE is currently in the RRC inactive state, the current state may remain unchanged) or the RRC idle state, or the UE may initiate a random access process to the access network device, to enter the RRC connected state. After entering the RRC connected state, the UE may continue to send small data (for example, the first data) to the access network device.

In still another case in which the UE needs to stop retransmission, if a second timer expires, the UE also considers that the first data is successfully transmitted, and therefore may stop retransmission. When the UE newly transmits the first data in the SDT procedure (for example, in S502), the UE may start the second timer. For example, the UE may start the first timer and the second timer synchronously. A difference between the two timers lies in that if the UE retransmits the first data, the first timer is restarted. However, if the UE retransmits the first data, the second timer is not restarted, and the second timer continues to run. If the second timer expires, the UE considers that the first data is successfully transmitted. For example, the second timer is a configured grant timer (configured grant timer), or may be another newly defined timer that has a function similar to that of the configured grant timer. Timing duration of the second timer is greater than timing duration of the first timer. The UE may maintain one second timer for each HARQ process, and the second timer herein is a second timer corresponding to the first HARQ process. Alternatively, the UE may maintain one second timer for all HARQ processes.

S507: If the first timer expires, the UE performs new transmission of the first data. Correspondingly, the access network device receives the first data. Optionally, if the first timer expires, the UE may perform new transmission of the first data on a fourth resource. Correspondingly, the access network device also receives the first data on the fourth resource. S507 may also be understood as follows: If the UE does not receive information from the access network device when the first timer expires ("not receive the information" herein mainly means that first information and second information are not received, and other information is not limited. In other words, in addition to the first information and the second information, the UE may receive the other information from the access network device, or may not receive the other information. However, as long as the first information and the second information are not received, it is considered that a condition for performing S507 is met), the UE newly transmits the first data on the fourth resource. Correspondingly, for the access network device, it may be understood that if the access network device does not send the information to the UE when the first timer expires, or if the access network device does not receive the first data on the first resource, the access network device may receive the first data on the fourth resource.

In S507, if the UE does not receive the information from the access network device when the first timer expires, the UE may obtain the first data from the first buffer, in other words, obtain a MAC PDU including the first data. For example, the first buffer in this case is a non-HARQ buffer, for example, an SDT buffer. After obtaining the first data from the first buffer, the UE sends the first data (or sends the MAC PDU including the first data) on the fourth resource. In S506, it is considered that the UE performs an automatic retransmission mechanism. Therefore, the UE obtains the first data from the HARQ buffer and retransmits the first data. In S507, it is considered that the UE does not perform the automatic retransmission mechanism. Therefore, the SDT buffer is enabled, and the UE obtains the first data from the SDT buffer. If the UE obtains the first data from the SDT buffer, it is considered that the first data is newly transmitted. Therefore, the UE may send the first data in a second HARQ process. The second HARQ process and the first HARQ process may be a same HARQ process, or may be different HARQ processes. It may be understood that although the UE is actually still retransmitting the first data at this time, for the UE, because the SDT buffer is used, the UE considers this transmission as a new transmission process. For example, if the UE does not support the automatic retransmission mechanism, or a current scenario does not support the automatic retransmission mechanism, the SDT buffer may be enabled, so that the UE can actually complete retransmission of the small data. A difference between S506 and S507 lies in that in S506, the UE performs HARQ retransmission, while in S507, the UE does not perform HARQ retransmission.

If the first buffer includes the non-HARQ buffer and the HARQ buffer, when the first timer expires, S506 or S507 may be performed. If the first buffer includes the non-HARQ buffer but does not include the HARQ buffer, S507 may be performed when the first timer expires. If the first buffer includes the HARQ buffer but does not include the non-HARQ buffer, S506 may be performed when the first timer expires.

S507 relates to new transmission of the first data, and the new transmission process is essentially retransmission of the first data. Therefore, S507 also relates to a moment at which the UE stops new transmission of the first data. A case in which the UE needs to stop new transmission of the first data is that the first data is successfully sent. For example, if the UE receives the first information, the UE may stop new transmission of the first data. In another case, if a maximum quantity of transmission times is reached, even if the UE does not receive the first information, the UE stops new transmission of the first data. For example, the maximum quantity of transmission times is configured by the access network device, for example, configured by using an RRCRelease message or a broadcast message. Alternatively, the maximum quantity of transmission times is preconfigured in the UE, or may be predefined by using a protocol. The maximum quantity of transmission times may be the same as or different from the foregoing maximum quantity of retransmission times. If the maximum quantity of transmission times is the same as the maximum quantity of retransmission times, the two parameters may be configured as a same parameter, or may be configured as two parameters. If the first data is not successfully transmitted when the maximum quantity of transmission times is reached, optionally, the UE may enter the RRC inactive state (if the UE is currently in the RRC inactive state, the current state may remain unchanged) or the RRC idle state, or the UE may initiate a random access process to the access network device, to enter the RRC connected state. After entering the RRC connected state, the UE may continue to send small data (for example, the first data) to the access network device.

In still another case in which the UE needs to stop new transmission of the first data, if a second timer expires, the UE also considers that the first data is successfully transmitted, and therefore may stop new transmission of the first data. For explanation of the second timer, refer to the foregoing descriptions.

In this embodiment of this application, the UE may start the first timer after sending the first data. If the first information is received before the first timer expires, the first timer is stopped. In this case, the UE may determine that the first data is successfully sent. A mechanism for determining, by using the first timer and the first information, whether the data is successfully sent is provided, and implementation is simple. If the first information is, for example, the MAC layer information, feedback information at a physical layer does not need to be introduced. This reduces impact on the physical layer, and enables the solutions in embodiments of this application to be more easily compatible with the conventional technology. Alternatively, the first information is, for example, information for scheduling a resource, and the information for scheduling a resource is currently defined existing information. Using the information for scheduling a resource as the first information can reduce impact on a current protocol without introducing new information.

As described above, in the CG-SDT procedure, that the UE sends the small data to the access network device may include the initial transmission phase, or include the initial transmission phase and the subsequent transmission phase. If the subsequent transmission phase is included, the UE needs to enter the subsequent transmission phase after determining that the data in the initial transmission phase is successfully transmitted. If the data in the initial transmission phase fails to be transmitted, the UE does not need to enter the subsequent transmission phase, but needs to continue to perform initial transmission, or perform another operation (for example, enter the RRC idle state or initiate the random access process). How the UE determines that the data in the initial transmission phase is successfully transmitted is a problem that needs to be resolved. Next, an embodiment of this application provides a second communication method. According to the method, the UE may determine whether the data in the initial transmission phase is successfully transmitted.

FIG. 7 is a flowchart of the method. In the embodiment shown in FIG. 7, an example in which UE performs a CG-SDT procedure is used.

S701: The UE sends third information to a HARQ entity of the UE when a first condition is met. Correspondingly, the HARQ entity of the UE receives the third information. For example, a MAC entity (or a MAC layer) of the UE sends the third information to the HARQ entity.

For example, a CG-SDT resource configured by an access network device for the UE is a periodic resource. It is assumed that a time domain location of each CG-SDT resource configured by the access network device is considered as a CG-SDT occasion. When a CG-SDT occasion is reached, the UE may determine whether a CG-SDT resource corresponding to the CG-SDT occasion can be used to send small data. For example, the CG-SDT resource corresponding to the CG-SDT occasion is referred to as a fifth resource. In this case, the UE may set an ID of a HARQ process of the to-be-sent small data to an ID of a HARQ process corresponding to the fifth resource (in other words, set the ID of the HARQ process to an ID of a HARQ process associated with physical uplink shared channel (physical uplink shared channel, PUSCH) duration corresponding to the fifth resource), and determine whether the first condition is met. If the first condition is met, the UE sends the third information to the HARQ entity, to send the small data by using the fifth resource.

The third information may indicate the fifth resource. For example, the third information includes information about the fifth resource, to indicate the fifth resource. Optionally, the MAC entity sends the third information to the HARQ entity. Alternatively, this step may be described as follows: The MAC entity sends the fifth resource to the HARQ entity, or the MAC entity sends the information about the fifth resource to the HARQ entity. For example, the information about the fifth resource includes one or more items of information such as time domain, frequency domain, or code domain that is of the fifth resource. The fifth resource may be used to send second data, and the second data is to-be-sent small data. A process in which the UE sends the second data belongs to an SDT procedure, and the SDT procedure is, for example, a CG-SDT procedure. The MAC entity sends the third information to the HARQ entity, so that the HARQ entity can send the second data by using the fifth resource. For example, a process in which the HARQ entity sends the second data belongs to a subsequent transmission phase. If the first condition is met, it may be considered that initial transmission succeeds. In other words, S701 may also be understood as follows: If initial transmission succeeds, the UE may enter the subsequent transmission phase. For another example, a process in which the HARQ entity sends the second data belongs to an initial transmission phase. If the first condition is met, it may be considered that the UE is performing the initial transmission phase. In other words, S701 may also be understood as follows: The UE sends the information about the fifth resource to the HARQ entity for small data transmission in the initial transmission phase.

The first condition may be implemented in a plurality of manners, which are described below by using examples.

### 1. First optional implementation of the first condition

In this implementation, the first condition includes, for example, that first information is received, and first data is, for example, a first piece of small data sent by the UE to the access network device, or it is understood that the first data is carried in a 1st data packet sent by the UE to the access network device. In other words, a process in which the UE sends the first data belongs to the initial transmission phase. If the UE receives the first information, it indicates that the first data is successfully transmitted, in other words, it indicates that initial transmission succeeds. For content such as the first data and content that the UE receives the first information, refer to the descriptions of the embodiment shown in FIG. 5.

If the first data is the first piece of small data sent by the UE to the access network device, and the UE receives the first information, the MAC entity of the UE may send the third information to the HARQ entity. Alternatively, optionally, if the first data is the first piece of small data sent by the UE to the access network device, and the UE receives the first information, the UE may further perform corresponding determining, and then determine whether to send the third information to the HARQ entity. For example, if the first data is the first piece of small data sent by the UE to the access network device, and the UE receives the first information, a further determining manner that may be performed by the UE is that the UE may determine whether a second timer is running for a third HARQ process, and whether a third timer is configured for the third HARQ process. If the second timer is not running for the third HARQ process, and the third timer is not configured for the third HARQ process, the UE considers that the fifth resource may be used for new data transmission (for example, the UE considers a new data indicator (new data indicator, NDI) bit to have been toggled). For example, the UE has received the first information, in other words, the initial transmission phase of the UE succeeds, and the UE is performing the subsequent transmission phase. In this case, the UE considers that the fifth resource may be used for new transmission of data in the subsequent transmission phase. The MAC entity of the UE may send the third information to the HARQ entity. Optionally, the MAC entity of the UE may further send an ID of the third HARQ process to the HARQ entity. The third HARQ process is a HARQ process corresponding to the fifth resource.

The second timer is, for example, a configured grant timer, or may be another timer with a similar function. The third timer is, for example, a cg-retransmission timer, or may be another timer with a similar function. According to the descriptions in the embodiment shown in FIG. 5, the second timer is a timer for limiting new transmission performed by using the HARQ process. If the second timer corresponding to the third HARQ process is in a running state, it indicates that the third HARQ process is used to perform new data transmission and cannot be used for new transmission of other data. If the second timer corresponding to the third HARQ process is not running, it indicates that the third HARQ process is not used to perform new data transmission currently, and may be used for new data transmission. In other words, if the second timer corresponding to the third HARQ process is not running, it indicates that the third HARQ process is used to perform new data transmission currently. When a CG-SDT occasion corresponding to the fifth resource arrives, the UE may consider using the fifth resource to perform new data transmission. It is considered herein that the NDI bit has been toggled means that the UE uses the fifth resource for new data transmission, and then the UE sends the resource to the HARQ entity, to facilitate data transmission processing. In addition, that the third timer is not configured for the third HARQ process means that the UE does not use an automatic retransmission mechanism in a subsequent transmission phase of CG-SDT, to be specific, if the second timer corresponding to the third HARQ process expires, the UE considers that data in the third HARQ process is successfully transmitted.

### 2. Second optional implementation of the first condition

In this implementation, the first condition includes, for example, that first information is received, first data is, for example, a first piece of small data sent by the UE to the access network device, or it is understood that the first data is carried in a 1st data packet sent by the UE to the access network device, and a first timer is configured and not running for a third HARQ process. In the first optional implementation of the first condition, the first timer is not limited. However, in the second optional implementation of the first condition, the condition that the first timer is configured and not running for the third HARQ process needs to be met. In the second optional implementation, the first condition includes the condition of the first timer. That is, the second optional implementation is applicable to a scenario in which the UE may use automatic retransmission. For example, the UE uses automatic retransmission for subsequent transmission. In the first optional implementation, the first condition does not include the condition of the first timer. That is, the first optional implementation is applicable to a scenario in which the UE may not use automatic retransmission. For example, the UE does not use automatic retransmission for subsequent transmission.

If the first data is the first piece of small data sent by the UE to the access network device, the UE receives the first information, and the first timer is configured and not running for the third HARQ process, the MAC entity of the UE may send the third information to the HARQ entity. Alternatively, optionally, if the first data is the first piece of small data sent by the UE to the access network device, the UE receives the first information, and the first timer is configured and not running for the third HARQ process, the UE may further perform corresponding determining, and then determine whether to send the third information to the HARQ entity. For example, if the first data is the first piece of small data sent by the UE to the access network device, the UE receives the first information, and the first timer is configured and not running for the third HARQ process, a determining manner may be further performed by the UE is that the UE may determine whether a second timer is running for the third HARQ process and whether the third HARQ process is suspended. If the second timer is not running for the third HARQ process and the third HARQ process is not suspended, the UE considers that the fifth resource may be used for new data transmission (for example, the UE considers that an NDI bit has been toggled). For example, if the UE has received the first information, in other words, the initial transmission phase of the UE has succeeded, and the UE is performing the subsequent transmission phase, the UE considers that the fifth resource may be used for subsequent new transmission. The second timer is used to limit new transmission performed by using the HARQ process. If the second timer is not running, it indicates that no new data transmission is performed in the third HARQ process. If the third HARQ process is suspended, it indicates that the third HARQ process is currently used to perform data transmission and receive a listen before talk (listen before talk, LBT) failure indication sent from a bottom layer, for example, a physical layer. Therefore, if the third HARQ process is not suspended, it may indicate that the third HARQ process is not used to perform data transmission. The MAC entity of the UE may send the third information to the HARQ entity. Optionally, the MAC entity of the UE may further send an ID of the third HARQ process to the HARQ entity.

Optionally, in the foregoing further performed determining manner, if the condition that the second timer is not running for the third HARQ process is not met, and the condition that the third HARQ process is not suspended is not met, the UE may continue to determine whether a previous resource that corresponds to the third HARQ process and that is sent to the HARQ entity is a preconfigured resource. If the previous resource that corresponds to the third HARQ process and that is sent to the HARQ entity is the preconfigured resource, the UE considers that the fifth resource may be used for data retransmission (for example, the UE considers that the NDI bit has not been toggled). For example, the UE has received the first information, in other words, the initial transmission phase of the UE succeeds, and the UE is performing the subsequent transmission phase. In this case, the UE considers that the fifth resource may be used for retransmission for subsequent transmission. Currently, the first timer of the UE is not running but the second timer is running, in other words, the third HARQ process may be used for data retransmission. If a transmission resource used before the third HARQ process is also a preconfigured resource, the UE may continue to retransmit the data by using the pre-configured resource. The MAC entity of the UE may send the third information to the HARQ entity. Optionally, the MAC entity of the UE may further send the ID of the third HARQ process to the HARQ entity.

In the foregoing further determining process performed by the UE, an example in which the UE uses the second timer is used. It is alternatively possible that the UE does not use the second timer in the SDT procedure. For example, the UE uses the first timer instead of the second timer. In this case, if the UE needs to perform further determining, a determining manner is different. For example, if the first data is the first piece of small data sent by the UE to the access network device, the UE receives the first information, and the first timer is configured and not running for the third HARQ process, a determining manner may be further performed by the UE is that the UE may determine if the third HARQ process is suspended. If the third HARQ process is not suspended, the UE considers that the fifth resource may be used for new data transmission (for example, the UE considers that the NDI bit has been toggled). For example, the UE has received the first information, in other words, the initial transmission phase of the UE succeeds, and the UE is performing the subsequent transmission phase. In this case, the UE considers that the fifth resource may be used for new transmission of data in the subsequent transmission phase. The MAC entity of the UE may send the third information to the HARQ entity. Optionally, the MAC entity of the UE may further send the ID of the third HARQ process to the HARQ entity.

Optionally, in the foregoing further performed determining manner, if the condition that the third HARQ process is not suspended is not met, the UE may continue to determine whether the previous resource that corresponds to the third HARQ process and that is sent to the HARQ entity is the preconfigured resource. If the previous resource that corresponds to the third HARQ process and that is sent to the HARQ entity is the preconfigured resource, the UE considers that the fifth resource may be used for data retransmission (for example, the UE considers that the NDI bit has not been toggled). For example, the UE has received the first information, in other words, the initial transmission phase of the UE succeeds, and the UE is performing the subsequent transmission phase. In this case, the UE considers that the fifth resource may be used for retransmission for subsequent transmission. If the transmission resource used before the third HARQ process is also a preconfigured resource, the UE may continue to retransmit the data by using the preconfigured resource. The MAC entity of the UE may send the third information to the HARQ entity. Optionally, the MAC entity of the UE may further send the ID of the third HARQ process to the HARQ entity.

### 3. Third optional implementation of the first condition

In this implementation, the first condition includes, for example, that a first timer is configured and not running for a third HARQ process, and that no HARQ process is suspended in the HARQ entity. Optionally, in the third optional implementation, the first condition may further include that the UE does not receive first information, and first data is, for example, a first piece of small data sent by the UE to the access network device, or it is understood that the first data is carried in a 1st data packet sent by the UE to the access network device. In other words, the UE has not received an acknowledgment message in the initial transmission phase. When the first timer is configured and not running for the third HARQ process, and no HARQ process is suspended in the HARQ entity, it indicates that the third HARQ process may be used for data transmission. In other words, in this case, the UE may perform data transmission in the initial transmission phase by using the third HARQ process. There may be a plurality of cases in which the first timer is configured and not running. For example, in a case, in the initial transmission phase, the UE has not sent the first piece of small data in the third HARQ process. In this case, the first timer is configured and not running. For another example, in another case, in the initial transmission phase or the subsequent transmission phase, if the first timer expires and is not restarted, the first timer is configured and not running.

If the first timer is configured and not running for the third HARQ process, and no HARQ process is suspended in the HARQ entity, the MAC entity of the UE may send the third information to the HARQ entity. Alternatively, optionally, if the first timer is configured and not running for the third HARQ process, and no HARQ process is suspended in the HARQ entity, the UE may further perform corresponding determining, and then determine whether to send the third information to the HARQ entity. For example, if the first timer is configured and not running for the third HARQ process, and no HARQ process is suspended in the HARQ entity, a determining manner may be further performed by the UE is that the UE may determine whether a second timer is running for the third HARQ process, and determine whether the third HARQ process is suspended. If the second timer is not running for the third HARQ process and the third HARQ process is not suspended, the UE considers that the fifth resource may be used for new data transmission (for example, the UE considers that an NDI bit has been toggled). For example, if the UE does not receive the first information, in other words, the initial transmission phase of the UE fails, the UE needs to perform the initial transmission phase. In this case, the UE considers that the fifth resource may be used for initial new transmission. The second timer is used to limit new transmission performed by using the HARQ process. If the second timer is not running, it indicates that no new data transmission is performed in the third HARQ process. If the third HARQ process is suspended, it indicates that the third HARQ process is currently used to perform data transmission and receives an LBT failure indication from a bottom layer (for example, a physical layer). Therefore, if the third HARQ process is not suspended, it may indicate that data transmission is not performed in the third HARQ process. The MAC entity of the UE may send the third information to the HARQ entity. Optionally, the MAC entity of the UE may further send an ID of the third HARQ process to the HARQ entity.

Optionally, in the foregoing further performed determining manner, if the condition that the second timer is not running for the third HARQ process is not met, and the condition that the third HARQ process is not suspended is not met, the UE may continue to determine whether a previous resource that corresponds to the third HARQ process and that is sent to the HARQ entity is a preconfigured resource. If the previous resource that corresponds to the third HARQ process and that is sent to the HARQ entity is the preconfigured resource, the UE considers that the fifth resource may be used for data retransmission (for example, the UE considers that the NDI bit has not been toggled). For example, if the UE does not receive the first information, in other words, the initial transmission phase of the UE fails, the UE needs to perform the initial transmission phase. In this case, the UE considers that the fifth resource may be used for retransmission for initial transmission. Currently, the first timer of the UE is not running but the second timer is running, in other words, the third HARQ process may be used for data retransmission. If a transmission resource used before the third HARQ process is also a pre-configured resource, the UE may continue to retransmit the data by using the pre-configured resource. The MAC entity of the UE may send the third information to the HARQ entity. Optionally, the MAC entity of the UE may further send the ID of the third HARQ process to the HARQ entity.

In the foregoing further determining process performed by the UE, an example in which the UE uses the second timer is used. It is alternatively possible that the UE does not use the second timer in the SDT procedure. For example, the UE uses the first timer instead of the second timer. In this case, if the UE needs to perform further determining, a determining manner is different. For example, the UE does not use the second timer. If the first timer is configured and not running for the third HARQ process, and no HARQ process is suspended in the HARQ entity, another determining manner may be further performed by the UE is that the UE may determine whether the third HARQ process is suspended. If the third HARQ process is not suspended, the UE considers that the fifth resource may be used for new data transmission (for example, the UE considers that the NDI bit has been toggled). For example, if the UE does not receive the first information, in other words, the initial transmission phase of the UE fails, the UE needs to perform the initial transmission phase. In this case, the UE considers that the fifth resource may be used for initial new transmission. If the third HARQ process is not suspended, it may indicate that data transmission is not performed in the third HARQ process. The MAC entity of the UE may send the third information to the HARQ entity. Optionally, the MAC entity of the UE may further send the ID of the third HARQ process to the HARQ entity.

Optionally, in the foregoing further performed determining manner, if the condition that the third HARQ process is not suspended is not met, the UE may continue to determine whether the previous resource that corresponds to the third HARQ process and that is sent to the HARQ entity is the preconfigured resource. If the previous resource that corresponds to the third HARQ process and that is sent to the HARQ entity is the preconfigured resource, the UE considers that the fifth resource may be used for data retransmission (for example, the UE considers that the NDI bit has not been toggled). For example, if the UE does not receive the first information, in other words, the initial transmission phase of the UE fails, the UE needs to perform the initial transmission phase. In this case, the UE considers that the fifth resource may be used for retransmission for initial transmission. If the transmission resource used before the third HARQ process is also a preconfigured resource, the UE may continue to retransmit the data by using the preconfigured resource. The MAC entity of the UE may send the third information to the HARQ entity. Optionally, the MAC entity of the UE may further send the ID of the third HARQ process to the HARQ entity.

### 4. Fourth optional implementation of the first condition

In this implementation, the first condition includes, for example, that a first timer is configured and not running for a third HARQ process, and the UE does not receive first information. Optionally, the first condition in the fourth optional implementation may further include that the UE does not receive the first information, and the first timer is configured and not running for the third HARQ process. First data is, for example, a first piece of small data sent by the UE to the access network device, or it is understood that the first data is carried in a 1st data packet sent by the UE to the access network device. In other words, the UE has not received an acknowledgment message in the initial transmission phase. If the first timer is configured and not running for the third HARQ process, it indicates that the third HARQ process may be used for data transmission. In other words, in this case, the UE may perform data transmission in the initial transmission phase by using the third HARQ process. If the first timer is configured and not running for the third HARQ process, and the UE does not receive the first information, the UE considers that the fifth resource may be used for new data transmission (for example, the UE considers that an NDI bit has been toggled). For example, if the UE does not receive the first information, in other words, the initial transmission phase of the UE fails, the UE needs to perform the initial transmission phase. In this case, the UE considers that the fifth resource may be used for initial new transmission. The MAC entity of the UE may send the third information to the HARQ entity. Optionally, the MAC entity of the UE may further send an ID of the third HARQ process to the HARQ entity.

### 5. Fifth optional implementation of the first condition

In this implementation, the first condition includes, for example, that a first timer is configured and not running for a third HARQ process. Optionally, the first condition in the fifth optional implementation may further include that the UE does not receive first information, and first data is, for example, a first piece of small data sent by the UE to the access network device, or it is understood that the first data is carried in a 1st data packet sent by the UE to the access network device. In other words, the UE has not received an acknowledgment message in the initial transmission phase. If the first timer is configured and not running for the third HARQ process, it indicates that the third HARQ process may be used for data transmission. In other words, in this case, the UE may perform data transmission in the initial transmission phase by using the third HARQ process. If the first timer is configured and not running for the third HARQ process, the UE considers that the fifth resource may be used for new data transmission (for example, the UE considers that an NDI bit has been toggled). For example, if the UE does not receive the first information, in other words, the initial transmission phase of the UE fails, the UE needs to perform the initial transmission phase. In this case, the UE considers that the fifth resource may be used for initial new transmission. The MAC entity of the UE may send the third information to the HARQ entity. Optionally, the MAC entity of the UE may further send an ID of the third HARQ process to the HARQ entity.

### 6. Sixth optional implementation of the first condition

In this implementation, for example, the first condition includes that a first buffer is empty. For the first buffer, refer to the descriptions of the embodiment shown in FIG. 5. For example, in this embodiment of this application, the first buffer is a non-HARQ buffer. If the first buffer is empty, it indicates that the UE has not performed initial transmission, and needs to send first data corresponding to the initial transmission phase. In this case, the UE needs a transmission resource to transmit the first data corresponding to the initial transmission phase, or initial transmission of the UE has succeeded, and the UE has cleared the first buffer, in other words, the UE has deleted the first data corresponding to the initial phase transmission from the first buffer. If subsequent transmission exists, the UE needs a transmission resource to transmit data corresponding to the subsequent transmission phase.

If the first buffer is empty, the MAC entity of the UE may send the third information to the HARQ entity. Alternatively, optionally, if the first buffer is empty, the UE may further perform corresponding determining, and then determine whether to send the third information to the HARQ entity. For example, if the first buffer is empty, a further determining manner that may be performed by the UE is that the UE may determine whether a second timer is running for a third HARQ process. If the second timer is not running for the third HARQ process, the UE considers that the fifth resource may be used for new data transmission (for example, the UE considers that an NDI bit has been toggled). For example, if the UE has received first information and the first buffer is empty, in other words, the initial transmission phase of the UE has succeeded, and the UE is performing the subsequent transmission phase, the UE considers that the fifth resource may be used for subsequent new transmission. The second timer is used to limit new transmission performed by using the HARQ process. If the second timer is not running, it indicates that no new data transmission is performed in the third HARQ process. For example, if the UE does not receive the first information and the first buffer is empty, in other words, the initial transmission phase of the UE fails, the UE still needs to perform the initial transmission phase. In this case, the UE considers that the fifth resource may be used for initial new transmission. The second timer is used to limit new transmission performed by using the HARQ process. If the second timer is not running, it indicates that no new data transmission is performed in the third HARQ process. In a further determining manner performed by the UE, the second timer may alternatively be replaced with a first timer. The MAC entity of the UE may send the third information to the HARQ entity. Optionally, the MAC entity of the UE may further send an ID of the third HARQ process to the HARQ entity.

Several optional implementations of the first condition are described above. In addition, there may be other implementations of the first condition. For example, an optional implementation of the first condition further includes the following condition: When a CG-SDT occasion is reached, the UE may determine whether a CG-SDT resource corresponding to the CG-SDT occasion can be used to send small data. If the first timer is configured for the third HARQ process, the UE further determines whether the second timer is running. If the second timer is not running, the UE further determines whether current transmission is in an initial transmission phase or a subsequent transmission phase. If the current transmission is in the initial transmission phase, to be specific, if the UE does not receive the first information corresponding to the 1st data packet, the UE considers that the NDI bit has been toggled, and sends the third information to the HARQ entity, to send the small data by using the fifth resource. For example, the fifth resource may be used to transmit perform initial new transmission. If the current transmission is in the subsequent transmission phase, to be specific, the UE has received the first information of the 1st data packet corresponding to the initial transmission phase, the UE considers that the NDI bit has been toggled, and sends the third information to the HARQ entity, to send the small data by using the fifth resource. For example, the fifth resource may be used to perfrom subsequent new transmission. In some embodiments, the UE may not distinguish whether the resource may be used for initial new transmission or subsequent new transmission. For example, if the second timer is not running and the UE does not receive the first information corresponding to the 1st data packet, or if the second timer is not running and the UE receives the first information corresponding to the 1st data packet, the UE considers that the NDI bit has been toggled, and sends the third information to the HARQ entity, to send the small data by using the fifth resource. For example, the fifth resource may be used for new transmission. When the first information corresponding to the 1st data packet is not received, the UE is in the initial transmission phase. When the first information corresponding to the 1st data packet is received, the UE is in the subsequent transmission phase.

If the second timer is running and the first timer is not running, and if the previous resource that corresponds to the third HARQ process and that is sent to the HARQ entity is a preconfigured resource for the 1st data packet in the initial transmission phase, and the UE does not receive the first information corresponding to the 1st data packet, the UE considers that the NDI bit has not been toggled, and sends the third information to the HARQ entity, to send the small data by using the fifth resource. For example, the fifth resource may be used to perform retransmission for initial transmission. If the second timer is running and the first timer is not running, and if the previous resource that corresponds to the third HARQ process and that is sent to the HARQ entity is a preconfigured resource for a data packet in the subsequent transmission phase, and the UE has received the first information corresponding to the 1st data packet, in other words, the initial transmission phase of the UE succeeds, the UE considers that the NDI bit has not been toggled, and sends the third information to the HARQ entity, to send the small data by using the fifth resource. For example, the fifth resource may be used to transmit retransmission for subsequent transmission. In some embodiments, the UE may not distinguish whether the resource may be used for initial new transmission or subsequent new transmission. For example, if the second timer is running and the first timer is not running, and if the previous resource that corresponds to the third HARQ process and that is sent to the HARQ entity is a preconfigured resource for the 1st data packet in the initial transmission phase, and the UE does not receive the first information corresponding to the 1st data packet, or if the second timer is running and the first timer is not running, and if the previous resource that corresponds to the third HARQ process and that is sent to the HARQ entity is a preconfigured resource for the 1st data packet in the subsequent transmission phase, and the UE has received the first information corresponding to the 1st data packet, the UE considers that the NDI bit has not been toggled, and sends the third information to the HARQ entity, to send the small data by using the fifth resource. For example, the fifth resource may be used for retransmission.

Optionally, if the third HARQ process is used for new data transmission, the third HARQ process and the first HARQ process of the embodiment shown in FIG. 5 may be a same HARQ process, or may be different HARQ processes. If the third HARQ process is used for data retransmission, for example, retransmission of the first data, the third HARQ process and the first HARQ process may be a same HARQ process.

S702: The HARQ entity of the UE sends the second data to the access network device on the fifth resource, and correspondingly, the access network device receives the second data from the UE on the fifth resource. The HARQ entity may send the second data to the access network device on the fifth resource by using the third HARQ process. Correspondingly, the access network device receives the second data from the UE on the fifth resource by using the third HARQ process.

It can be learned from the foregoing descriptions that the UE may newly transmit data or retransmit data through the fifth resource. If the second data is newly transmitted data, the second data and the first data are different data. If the second data is retransmitted data, for example, the first data is retransmitted, the second data and the first data are the same data.

Optionally, S701 and S702 may alternatively be replaced with: If the first condition is met, the UE sends the second data to the access network device, and correspondingly, the access network device receives the second data from the UE. Alternatively, S701 and S702 may alternatively be replaced with: If the first condition is met, the HARQ entity of the UE sends the second data to the access network device on the fifth resource, and correspondingly, the access network device receives the second data from the UE on the fifth resource.

The embodiment shown in FIG. 5 describes the SDT procedure, and the embodiment shown in FIG. 7 describes how the UE determines whether the initial transmission phase succeeds. Therefore, the embodiment shown in FIG. 7 and the embodiment shown in FIG. 5 may be applied in combination. For example, when performing the procedure of the embodiment shown in FIG. 5, the UE may determine, in the manner of the embodiment shown in FIG. 7, whether the initial transmission phase succeeds. Alternatively, the embodiment shown in FIG. 5 and the embodiment shown in FIG. 7 may not be combined, but are applied separately.

Based on the embodiment shown in FIG. 7, the UE can determine whether the initial transmission phase succeeds, so that the subsequent transmission phase can be performed when the initial transmission phase succeeds, and a small data transmission process can be performed in an orderly manner.

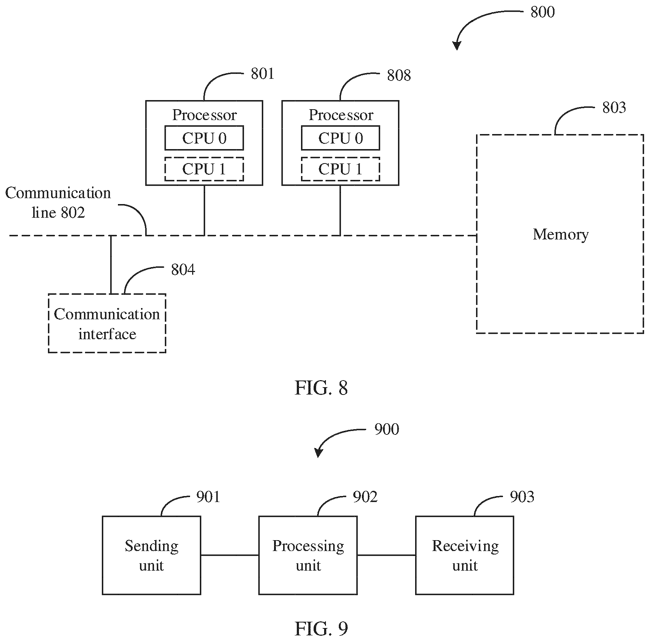

FIG. 8 is a schematic diagram of a structure of a communication apparatus according to an embodiment of this application. A communication apparatus 800 may be the terminal device in the embodiment shown in FIG. 5 or the embodiment shown in FIG. 7 or a circuit system of the terminal device, and is configured to implement the method corresponding to the terminal device in the foregoing method embodiment. Alternatively, a communication apparatus 800 may be the access network device in the embodiment shown in FIG. 5 or the embodiment shown in FIG. 7 or a circuit system of the access network device, and is configured to implement the method corresponding to the access network device in the foregoing method embodiment. For a specific function, refer to the descriptions in the foregoing method embodiment. For example, the circuit system is a chip system.

The communication apparatus 800 includes at least one processor 801. The processor 801 may be configured for internal processing of the apparatus, to implement a specific control processing function. Optionally, the processor 801 includes instructions. Optionally, the processor 801 may store data. Optionally, different processors may be independent components, may be located in different physical locations, or may be located on different integrated circuits. Optionally, different processors may be integrated into one or more processors, for example, integrated into one or more integrated circuits.

Optionally, the communication apparatus 800 includes one or more memories 803, configured to store instructions. Optionally, the memory 803 may further store data. The processor and the memory may be separately disposed, or may be integrated together.

Optionally, the communication apparatus 800 includes a communication line 802 and at least one communication interface 804. The memory 803, the communication line 802, and the communication interface 804 are all optional items, and therefore are all represented by dashed lines in FIG. 8.

Optionally, the communication apparatus 800 may further include a transceiver and/or an antenna. The transceiver may be configured to send information to or receive information from another apparatus. The transceiver may be referred to as a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 801 may include a general-purpose central processing unit (central processing unit, CPU), a microprocessor, an application-specific integrated circuit (application-specific integrated circuit, ASIC), or one or more integrated circuits that are configured to control program execution in the solutions of this application.

The communication line 802 may include a path and transfers information between the foregoing components.

The communication interface 804 is configured to communicate, by using any apparatus such as a transceiver, with another device or a communication network, for example, the Ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, or random access memory (random access memory, RAM) or another type of dynamic storage device that can store information and instructions. Alternatively, the memory 803 may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of instructions or a data structure and that can be accessed by a computer. However, the memory 803 is not limited thereto. The memory 803 may exist independently, and is connected to the processor 801 through the communication line 802. Alternatively, the memory 803 and the processor 801 may be integrated together.

The memory 803 is configured to store computer-executable instructions for executing the solutions of this application, and the processor 801 controls execution. The processor 801 is configured to execute the computer-executable instructions stored in the memory 803, to implement the communication method provided in the foregoing embodiments of this application.

Optionally, the computer-executable instructions in this embodiment of this application may also be referred to as application program code. This is not specifically limited in embodiments of this application.

In specific implementation, in an embodiment, the processor 801 may include one or more CPUs, such as a CPU 0 and a CPU 1 in FIG. 8.

In specific implementation, in an embodiment, the communication apparatus 800 may include a plurality of processors, for example, the processor 801 and a processor 808 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip of the access network device, a chip of a UPF, a chip of an SMF, or a chip of the terminal device, the chip includes the processor 801 (which may further include the processor 808), the communication line 802, the memory 803, and the communication interface 804. Specifically, the communication interface 804 may be an input interface, a pin, a circuit, or the like. The memory 803 may be a register, a cache, or the like. Each of the processor 801 and the processor 808 may be a general-purpose CPU, a microprocessor, an ASIC, or one or more integrated circuits configured to control program execution of the communication method in any one of the foregoing embodiments.

In a first implementation, the communication apparatus 800 may be configured to implement the method corresponding to the terminal device in the foregoing embodiment of this application. For a specific function, refer to the descriptions in the foregoing embodiment.

For example, the communication apparatus 800 includes the processor 801, and the processor 801 is configured to execute a computer program or instructions, so that the method corresponding to the terminal device in the foregoing embodiment of this application is performed. For example, the method corresponding to the terminal device in the foregoing embodiment of this application includes: sending first data to an access network device on a first resource, and starting a first timer, where the first resource is a preconfigured resource, the first data is small data, and the terminal device is in an RRC non-connected state; and if first information is received before the first timer expires, stopping the first timer, where the first information is information indicating that the first data is successfully transmitted, and the first information is MAC layer information, or the first information is information for scheduling a resource.

For another example, the method corresponding to the terminal device in the foregoing embodiment of this application includes: sending first data to an access network device on a first resource, and starting a first timer, where the first resource is a preconfigured resource, the first data is small data, and the terminal device is in an RRC non-connected state; and if second information for scheduling a retransmission resource is received before the first timer expires, retransmitting the first data on a second resource, and restarting the first timer, where the second resource is a resource scheduled by using the second information.

For still another example, the method corresponding to the terminal device in the foregoing embodiment of this application includes: sending first data to an access network device on a first resource, and starting a first timer, where the first resource is a preconfigured resource, the first data is small data, and the terminal device is in an RRC non-connected state; and if the first timer expires, retransmitting the first data on a third resource, where the third resource is a preconfigured resource, and the third resource corresponds to a first HARQ process.

For yet another example, the method corresponding to the terminal device in the foregoing embodiment of this application includes: sending first data to an access network device on a first resource, and starting a first timer, where the first resource is a preconfigured resource, the first data is small data, and the terminal device is in an RRC non-connected state; if the first timer expires, obtaining the first data from a first buffer, where the first buffer is used to store small data; and performing new transmission of the first data on a fourth resource by using a second HARQ process, where the fourth resource is a preconfigured resource.

In a second implementation, the communication apparatus 800 may be configured to implement the method corresponding to the access network device in the foregoing embodiment of this application. For a specific function, refer to the descriptions in the foregoing embodiment.

For example, the communication apparatus 800 includes the processor 801, and the processor 801 is configured to execute a computer program or instructions, so that the method corresponding to the access network device in the foregoing embodiment of this application is performed. For example, the method corresponding to the access network device in the foregoing embodiment of this application includes: receiving first data from a terminal device on a first resource, and starting a first timer, where the first resource is a preconfigured resource, the first data is small data, and the terminal device is in an RRC non-connected state; and before the first timer expires, sending first information to the terminal device, and stopping the first timer, where the first information is information indicating that the first data is successfully transmitted, and the first information is media access control MAC layer information, or the first information is information for scheduling a resource.

For another example, the method corresponding to the access network device in the foregoing embodiment of this application includes: receiving first data from a terminal device on a first resource, and starting a first timer, where the first resource is a preconfigured resource, the first data is small data, and the terminal device is in an RRC non-connected state; and if the first data fails to be received, before the first timer expires, sending, to the terminal device, second information for scheduling a retransmission resource; or receiving the first data from the terminal device on a second resource, and restarting the first timer, where the second resource is a resource scheduled by using the second information.

For still another example, the method corresponding to the access network device in the foregoing embodiment of this application includes: receiving first data from a terminal device on a first resource, and starting a first timer, where the first resource is a preconfigured resource, the first data is small data, and the terminal device is in an RRC non-connected state; and skipping sending first information and second information to the terminal device, where the second information is used to schedule a retransmission resource, the first information is information indicating that the first data is successfully transmitted, and the first information is MAC layer information, or the first information is information for scheduling a resource.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. For example, when each functional module is obtained through division based on each corresponding function, FIG. 9 is a schematic diagram of an apparatus. An apparatus 900 may be the access network device or the terminal device in the foregoing method embodiments, or may be a chip in the access network device or a chip in the terminal device. The apparatus 900 includes a sending unit 901, a processing unit 902, and a receiving unit 903.

It should be understood that the apparatus 900 may be configured to implement the steps performed by the access network device or the terminal device in the method in embodiments of this application. For related features, refer to the foregoing embodiments. Details are not described herein again.

Optionally, functions/implementation processes of the sending unit 901, the receiving unit 903, and the processing unit 902 in FIG. 9 may be implemented by the processor 801 in FIG. 8 by invoking computer-executable instructions stored in the memory 803. Alternatively, a function/implementation process of the processing unit 902 in FIG. 9 may be implemented by the processor 801 in FIG. 8 by invoking computer-executable instructions stored in the memory 803, and functions/implementation processes of the sending unit 901 and the receiving unit 903 in FIG. 9 may be implemented through the communication interface 804 in FIG. 8.

Optionally, when the apparatus 900 is a chip or a circuit, the functions/implementation processes of the sending unit 901 and the receiving unit 903 may alternatively be implemented by using a pin, a circuit, or the like.

This application further provides a computer-readable storage medium. The computer-readable storage medium stores a computer program or instructions. When the computer program or the instructions is/are run, the method performed by the access network device or the terminal device in the foregoing method embodiments is implemented. In this way, the function in the foregoing embodiment may be implemented in a form of a software functional unit and sold or used as an independent product. Based on such an understanding, the technical solutions of this application essentially, or the part contributing to the conventional technology, or some of the technical solutions may be implemented in a form of a software product. The software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the terminal device or the access network device in any one of the foregoing method embodiments.

An embodiment of this application further provides a processing apparatus, including a processor and an interface. The processor is configured to perform the method performed by the terminal device or the access network device in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable disk, a CD-ROM, or a storage medium in any other format in this field. For example, the storage medium may be connected to a processor, so that the processor may read information from the storage medium and write information into the storage medium. Optionally, the storage medium may further be integrated into the processor. The processor and the storage medium may be disposed in an ASIC, and the ASIC may be disposed in the terminal device. Optionally, the processor and the storage medium may alternatively be disposed in different components in the terminal device.

These computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application that are defined by the appended claims, and are considered to cover any or all of modifications, variations, combinations, or equivalents in the scope of embodiments of this application. Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

Embodiment 1: A communication method, applied to a terminal device, where the method includes:
sending first data to an access network device on a first resource, and starting a first timer, where the first resource is a preconfigured resource, the first data is small data, and the terminal device is in an RRC non-connected state; and
if first information is received before the first timer expires, stopping the first timer, where the first information is information indicating that the first data is successfully transmitted, and the first information is MAC layer information, or the first information is information for scheduling a resource.

Embodiment 2: According to the method according to Embodiment 1, the first timer is a first timer corresponding to a first HARQ process, and the first HARQ process is used to send the first data.

Embodiment 3: According to the method according to Embodiment 1 or 2, the first information is the information indicating that the first data is successfully transmitted, where
the first information is a first MAC subheader, and a value of an LCID included in the first MAC subheader is a first value; and if the value of the LCID is the first value, it indicates that the first data is successfully transmitted;
the first information is a MAC CE, the MAC CE indicates that the first data is successfully transmitted, the MAC CE is identified by a second MAC subheader, and a value of an LCID included in the second MAC subheader is a second value; and if the value of the LCID is the second value, it indicates that the MAC CE is a MAC CE having a function of indicating the first information; or
the first information is a third MAC subheader, the terminal device receives the first information within first duration after sending the first data, and the first duration corresponds to the first HARQ process.

Embodiment 4: According to the method according to Embodiment 3, that the MAC CE indicates that the first data is successfully transmitted includes:
the MAC CE includes a first identifier, the first identifier is an identifier of the first HARQ process, and the first identifier indicates that data transmission in the first HARQ process succeeds.

Embodiment 5: According to the method according to Embodiment 3 or 4, the first information further includes a timing advance command, and the timing advance command is used to update a timing advance of the terminal device.

Embodiment 6: According to the method according to any one of Embodiments 1 to 5, the method further includes:
if second information for scheduling a retransmission resource is received before the first timer expires, retransmitting the first data on a second resource, and restarting the first timer, where the second resource is a resource scheduled by using the second information.

Embodiment 7: According to the method according to any one of Embodiments 1 to 5, the method further includes:
retransmitting the first data on a third resource if the first timer expires, where the third resource is a preconfigured resource, and the third resource corresponds to the first HARQ process.

Embodiment 8: According to the method according to any one of Embodiments 1 to 5, the method further includes:
if the first timer expires, obtaining the first data from a first buffer, where the first buffer is used to store small data; and
performing new transmission of the first data on a fourth resource by using a second HARQ process, where the fourth resource is a preconfigured resource.

Embodiment 9: According to the method according to Embodiment 8, the method further includes:
before sending the first data to the access network device on the first resource, storing the first data in the first buffer.

Embodiment 10: According to the method according to Embodiment 8 or 9, the method further includes:
clearing the first buffer when resetting a MAC layer, before initiating a small data transmission process, or when receiving the first information.

Embodiment 11: According to the method according to Embodiment 6 or 7, the method further includes:
if a maximum quantity of retransmission times is reached, entering an RRC inactive state or an RRC idle state, or initiating a random access process to the access network device.

Embodiment 12: According to the method according to any one of Embodiments 8 to 10, the method further includes:
if a maximum quantity of transmission times is reached, entering an RRC inactive state or an RRC idle state, or initiating a random access process to the access network device.

Embodiment 13: According to the method according to any one of Embodiments 1 to 12, the method further includes:
sending third information to a HARQ entity when a first condition is met, where the third information indicates a fifth resource, the fifth resource is used to send second data, and the second data is small data; and the first condition includes one or more of the following:
the first information is received, where the first data is a first piece of data sent by the terminal device to the access network device;
the first information is received, where the first data is a first piece of data sent by the terminal device to the access network device, and the first timer is configured and not running for a HARQ process corresponding to the fifth resource;
the first timer is configured and not running for a HARQ process corresponding to the fifth resource, and no HARQ process is suspended in the HARQ entity;
the first timer is configured and not running for a HARQ process corresponding to the fifth resource, and the first information is not received;
the first timer is configured and not running for a HARQ process corresponding to the fifth resource; or
the first buffer is empty.

Embodiment 14: A communication method, applied to an access network device, where the method includes:
receiving first data from a terminal device on a first resource, and starting a first timer, where the first resource is a preconfigured resource, the first data is small data, and the terminal device is in an RRC non-connected state; and
before the first timer expires, sending first information to the terminal device, and stopping the first timer, where the first information is information indicating that the first data is successfully transmitted, and the first information is MAC layer information, or the first information is information for scheduling a resource.

Embodiment 15: According to the method according to Embodiment 14, the first timer is a first timer corresponding to a first HARQ process, and the first HARQ process is used to send the first data.

Embodiment 16: According to the method according to Embodiment 14 or 15, the first information is the information indicating that the first data is successfully transmitted, where
the first information is a first MAC subheader, and a value of an LCID included in the first MAC subheader is a first value; and if the value of the LCID is the first value, it indicates that the first data is successfully transmitted;
the first information is a MAC CE, the MAC CE indicates that the first data is successfully transmitted, the MAC CE is identified by a second MAC subheader, and a value of an LCID included in the second MAC subheader is a second value; and if the value of the LCID is the second value, it indicates that the MAC CE is a MAC CE having a function of indicating the first information; or
the first information is a third MAC subheader, the terminal device receives the first information within first duration after sending the first data, and the first duration corresponds to the first HARQ process.

Embodiment 17: According to the method according to Embodiment 16, that the MAC CE indicates that the first data is successfully transmitted includes:
the MAC CE includes a first identifier, the first identifier is an identifier of the first HARQ process, and the first identifier indicates that data transmission in the first HARQ process succeeds.

Embodiment 18: According to the method according to Embodiment 16 or 17, the first information further includes a timing advance command, and the timing advance command is used to update a timing advance of the terminal device.

Embodiment 19: A communication method, applied to a terminal device, where the method includes:
sending first data to an access network device on a first resource, and starting a first timer, where the first resource is a preconfigured resource, the first data is small data, and the terminal device is in an RRC non-connected state; and
if second information for scheduling a retransmission resource is received before the first timer expires, retransmitting the first data on a second resource, and restarting the first timer, where the second resource is a resource scheduled by using the second information.

Embodiment 20: A communication method, applied to an access network device, where the method includes:
receiving first data from a terminal device on a first resource, and starting a first timer, where the first resource is a preconfigured resource, the first data is small data, and the terminal device is in an RRC non-connected state; and
if the first data fails to be received, before the first timer expires, sending second information for scheduling a retransmission resource to the terminal device; or receiving the first data from the terminal device on a second resource, and restarting the first timer, where the second resource is a resource scheduled by using the second information.

Embodiment 21: A communication method, applied to a terminal device, where the method includes:
sending first data to an access network device on a first resource, and starting a first timer, where the first resource is a preconfigured resource, the first data is small data, and the terminal device is in an RRC non-connected state; and
retransmitting the first data on a third resource if the first timer expires, where the third resource is a preconfigured resource, and the third resource corresponds to a first HARQ process.

Embodiment 22: A communication method, applied to a terminal device, where the method includes:
sending first data to an access network device on a first resource, and starting a first timer, where the first resource is a preconfigured resource, the first data is small data, and the terminal device is in an RRC non-connected state; and
if the first timer expires, obtaining the first data from a first buffer, where the first buffer is used to store small data; and performing new transmission of the first data on a fourth resource by using a second HARQ process, where the fourth resource is a preconfigured resource.

Embodiment 23: A communication method, applied to an access network device, where the method includes:
receiving first data from a terminal device on a first resource, and starting a first timer, where the first resource is a preconfigured resource, the first data is small data, and the terminal device is in an RRC non-connected state; and
skipping sending first information and second information to the terminal device, where the second information is used to schedule a retransmission resource, the first information is information indicating that the first data is successfully transmitted, and the first information is MAC layer information, or the first information is information for scheduling a resource.

Embodiment 24: A communication apparatus, including:
a transceiver unit, configured to send first data to an access network device on a first resource, and start a first timer, where the first resource is a preconfigured resource, the first data is small data, and the communication apparatus is in an RRC non-connected state; and
a processing unit, configured to: if first information is received by using the transceiver unit before the first timer expires, stop the first timer, where the first information is information indicating that the first data is successfully transmitted, and the first information is MAC layer information, or the first information is information for scheduling a resource.

Embodiment 25: According to the communication apparatus according to Embodiment 24, the first timer is a first timer corresponding to a first HARQ process, and the first HARQ process is used to send the first data.

Embodiment 26: According to the communication apparatus according to Embodiment 24 or 25, the first information is the information indicating that the first data is successfully transmitted, where
the first information is a first MAC subheader, and a value of an LCID included in the first MAC subheader is a first value; and if the value of the LCID is the first value, it indicates that the first data is successfully transmitted;
the first information is a MAC CE, the MAC CE indicates that the first data is successfully transmitted, the MAC CE is identified by a second MAC subheader, and a value of an LCID included in the second MAC subheader is a second value; and if the value of the LCID is the second value, it indicates that the MAC CE is a MAC CE having a function of indicating the first information; or
the first information is a third MAC subheader, the communication apparatus receives the first information within first duration after sending the first data, and the first duration corresponds to the first HARQ process.

Embodiment 27: According to the communication apparatus according to Embodiment 26, that the MAC CE indicates that the first data is successfully transmitted includes:
the MAC CE includes a first identifier, the first identifier is an identifier of the first HARQ process, and the first identifier indicates that data transmission in the first HARQ process succeeds.

Embodiment 28: According to the communication apparatus according to Embodiment 24 or 25, the first information further includes a timing advance command, and the timing advance command is used to update a timing advance of the communication apparatus.

Embodiment 29: According to the communication apparatus according to any one of Embodiments 24 to 28,
the transceiver unit is further configured to: if second information for scheduling a retransmission resource is received before the first timer expires, retransmit the first data on a second resource, where the second resource is a resource scheduled by using the second information; and
the processing unit is further configured to restart the first timer.

Embodiment 30: According to the communication apparatus according to any one of Embodiments 24 to 28, the transceiver unit is further configured to: if the first timer expires, retransmit the first data on a third resource, where the third resource is a preconfigured resource, and the third resource corresponds to the first HARQ process.

Embodiment 31: According to the communication apparatus according to any one of Embodiments 24 to 28,
the processing unit is further configured to: if the first timer expires, obtain the first data from a first buffer, where the first buffer is used to store small data; and
the transceiver unit is further configured to perform new transmission of the first data on a fourth resource by using a second HARQ process, where the fourth resource is a preconfigured resource.

Embodiment 32: According to the communication apparatus according to Embodiment 31, the processing unit is further configured to: before the transceiver unit sends the first data to the access network device on the first resource, store the first data in the first buffer.

Embodiment 33: According to the communication apparatus according to Embodiment 31 or 32, the processing unit is further configured to clear the first buffer when resetting a MAC layer, before initiating a small data transmission process, or when the transceiver unit receives the first information.

Embodiment 34: According to the communication apparatus according to Embodiment 29 or 30, the processing unit is further configured to: if a maximum quantity of retransmission times is reached, enter an RRC inactive state or an RRC idle state, or initiate a random access process to the access network device.

Embodiment 35: According to the communication apparatus according to any one of Embodiments 31 to 33, the processing unit is further configured to: if a maximum quantity of transmission times is reached, enter an RRC inactive state or an RRC idle state, or initiate a random access process to the access network device.

Embodiment 36: According to the communication apparatus according to any one of Embodiments 24 to 35,
the transceiver unit is further configured to send third information to a HARQ entity when a first condition is met, where the third information indicates a fifth resource, the fifth resource is used to send second data, and the second data is small data; and the first condition includes one or more of the following:
the transceiver unit receives the first information, where the first data is a first piece of data sent by the communication apparatus to the access network device;
the transceiver unit receives the first information, where the first data is a first piece of data sent by the communication apparatus to the access network device, and the first timer is configured and not running for a HARQ process corresponding to the fifth resource;
the first timer is configured and not running for a HARQ process corresponding to the fifth resource, and no HARQ process is suspended in the HARQ entity;
the first timer is configured and not running for a HARQ process corresponding to the fifth resource, and the transceiver unit does not receive the first information;
the first timer is configured and not running for a HARQ process corresponding to the fifth resource; or
the first buffer is empty.

Embodiment 37: A communication apparatus, including:
a transceiver unit, configured to receive first data from a terminal device on a first resource, where the first resource is a preconfigured resource, the first data is small data, and the terminal device is in an RRC non-connected state; and
a processing unit, configured to start a first timer, where
the transceiver unit is further configured to send first information to the terminal device before the first timer expires, where the first information is information indicating that the first data is successfully transmitted, and the first information is MAC layer information, or the first information is information for scheduling a resource; and
the processing unit is further configured to stop the first timer.

Embodiment 38: According to the communication apparatus according to Embodiment 37, the first timer is a first timer corresponding to a first HARQ process, and the first HARQ process is used to send the first data.

Embodiment 39: According to the communication apparatus according to Embodiment 37 or 38, the first information is the information indicating that the first data is successfully transmitted, where
the first information is a first MAC subheader, and a value of an LCID included in the first MAC subheader is a first value; and if the value of the LCID is the first value, it indicates that the first data is successfully transmitted;
the first information is a MAC CE, the MAC CE indicates that the first data is successfully transmitted, the MAC CE is identified by a second MAC subheader, and a value of an LCID included in the second MAC subheader is a second value; and if the value of the LCID is the second value, it indicates that the MAC CE is a MAC CE having a function of indicating the first information; or
the first information is a third MAC subheader, the terminal device receives the first information within first duration after sending the first data, and the first duration corresponds to the first HARQ process.

Embodiment 40: According to the communication apparatus according to Embodiment 39, that the MAC CE indicates that the first data is successfully transmitted includes:
the MAC CE includes a first identifier, the first identifier is an identifier of the first HARQ process, and the first identifier indicates that data transmission in the first HARQ process succeeds.

Embodiment 41: According to the communication apparatus according to Embodiment 39 or 40, the first information further includes a timing advance command, and the timing advance command is used to update a timing advance of the terminal device.

Embodiment 42: A communication apparatus, including:
a transceiver unit, configured to send first data to an access network device on a first resource, where the first resource is a preconfigured resource, the first data is small data, and the communication apparatus is in an RRC non-connected state; and
a processing unit, configured to start a first timer, where
the transceiver unit is further configured to: if second information for scheduling a retransmission resource is received before the first timer expires, retransmit the first data on a second resource, where the second resource is a resource scheduled by using the second information; and
the processing unit is further configured to restart the first timer.

Embodiment 43: A communication apparatus, including:
a transceiver unit, configured to receive first data from a terminal device on a first resource, where the first resource is a preconfigured resource, the first data is small data, and the terminal device is in an RRC non-connected state; and
a processing unit, configured to start a first timer, where
the transceiver unit is further configured to: if the first data fails to be received, send, to the terminal device before the first timer expires, second information for scheduling a retransmission resource;
the transceiver unit is further configured to receive the first data from the terminal device on a second resource, where the second resource is a resource scheduled by using the second information; and
the processing unit is further configured to restart the first timer.

Embodiment 44: A communication apparatus, including:
a transceiver unit, configured to send first data to an access network device on a first resource, where the first resource is a preconfigured resource, the first data is small data, and the communication apparatus is in an RRC non-connected state; and
a processing unit, configured to start a first timer, where
the transceiver unit is further configured to: if the first timer expires, retransmit the first data on a third resource, where the third resource is a preconfigured resource, and the third resource corresponds to a first HARQ process.

Embodiment 45: A communication apparatus, including:
a transceiver unit, configured to send first data to an access network device on a first resource, where the first resource is a preconfigured resource, the first data is small data, and the communication apparatus is in an RRC non-connected state; and
a processing unit, configured to start a first timer, where
the processing unit is further configured to: if the first timer expires, obtain the first data from a first buffer, where the first buffer is used to store small data; and
the transceiver unit is further configured to perform new transmission of the first data on a fourth resource by using a second HARQ process, where the fourth resource is a preconfigured resource.

Embodiment 46: A communication apparatus, including:
a transceiver unit, configured to receive first data from a terminal device on a first resource, where the first resource is a preconfigured resource, the first data is small data, and the terminal device is in an RRC non-connected state; and
a processing unit, configured to start a first timer, where
the transceiver unit is further configured to skip sending first information and second information to the terminal device, where the second information is used to schedule a retransmission resource, the first information is information indicating that the first data is successfully transmitted, and the first information is MAC layer information, or the first information is information for scheduling a resource.

Embodiment 47: An apparatus, including units for performing the method described in any one of embodiments of this application.

Embodiment 48: A computer program product, where the computer program product includes a computer program; and when the computer program is run on a computer, the computer is enabled to perform the method according to any one of Embodiments 1 to 13, the computer is enabled to perform the method according to any one of Embodiments 14 to 18, the computer is enabled to perform the method according to Embodiment 19, the computer is enabled to perform the method according to Embodiment 20, the computer is enabled to perform the method according to Embodiment 21, the computer is enabled to perform the method according to Embodiment 22, or the computer is enabled to perform the method according to Embodiment 23.

## Claims

1. A communication method, applied to a terminal device, wherein the method comprises:
sending third information to a hybrid automatic repeat request HARQ entity when a first condition is met, wherein the third information indicates a fifth resource and/or HARQ information associated with the fifth resource, the fifth resource and/or the HARQ information associated with the fifth resource are/is used to send second data, and the second data is small data; and the first condition comprises one or more of the following:
a first timer is not configured for a HARQ process corresponding to the fifth resource;
a second timer is not running for a HARQ process corresponding to the fifth resource;
a third timer is not configured for a HARQ process corresponding to the fifth resource;
first information is received, wherein the first information is information indicating that first data is successfully transmitted, and the first data is a first piece of data for an initial transmission phase of configured grant small data transmission CG-SDT with a common control channel CCCH message;
a first timer is configured and not running for a HARQ process corresponding to the fifth resource;
a previous resource sent to the HARQ entity for a HARQ process of the HARQ entity is a preconfigured resource for initial transmission or retransmission of first data, the HARQ process of the HARQ entity is the same as a HARQ process corresponding to the fifth resource, and the first data is a first piece of data for an initial transmission phase of CG-SDT with a CCCH message; or
first information is not received, wherein the first information is information indicating that first data is successfully transmitted, and the first data is a first piece of data for an initial transmission phase of CG-SDT with a CCCH message.

2. The method according to claim 1, wherein the sending third information to a HARQ entity, wherein the third information indicates a fifth resource and/or HARQ information associated with the fifth resource comprises:
the fifth resource and/or the HARQ information associated with the fifth resource are/is used for subsequent new transmission, wherein the first condition comprises one or more of the following:
the first timer is not configured for the HARQ process corresponding to the fifth resource;
the second timer is not running for the HARQ process corresponding to the fifth resource;
the third timer is not configured for the HARQ process corresponding to the fifth resource;
or
the first information is received.

3. The method according to claim 1, wherein the sending third information to a HARQ entity, wherein the third information indicates a fifth resource and/or HARQ information associated with the fifth resource comprises:
the fifth resource and/or the HARQ information associated with the fifth resource are/is used for subsequent new transmission, wherein the first condition comprises one or more of the following:
the second timer is not running for the HARQ process corresponding to the fifth resource;
the first information is received; or
the first timer is configured and not running for the HARQ process corresponding to the fifth resource.

4. The method according to claim 1, wherein the sending third information to a HARQ entity, wherein the third information indicates a fifth resource and/or HARQ information associated with the fifth resource comprises:
the fifth resource and/or the HARQ information associated with the fifth resource are/is used for retransmission for initial transmission, wherein the first condition comprises one or more of the following:
the first timer is configured and not running for the HARQ process corresponding to the fifth resource;
the previous resource sent to the HARQ entity for HARQ process of the HARQ entity is a preconfigured resource for initial transmission or retransmission of a first piece of data in the initial transmission phase, and the HARQ process of the HARQ entity is the same as the HARQ process corresponding to the fifth resource; or
the first information is not received.

5. The method according to any one of claims 2 to 4, wherein the method further comprises:
sending the first data to an access network device in the initial transmission phase; and
performing the subsequent transmission phase after the first information is received.

6. The method according to any one of claims 2 to 4, wherein
the fifth resource and/or the HARQ information associated with the fifth resource are/is used for retransmission for initial transmission, and a new data indicator NDI bit for the HARQ process corresponding to the fifth resource has not been toggled; or
the fifth resource and/or the HARQ information associated with the fifth resource are/is used for subsequent new transmission, and an NDI bit for the HARQ process corresponding to the fifth resource has been toggled.

7. The method according to any one of claims 1 to 6, wherein the method further comprises:
sending the first data to the access network device on a first resource, and starting the first timer, wherein the first resource is a preconfigured resource; and
if the first information is received before the first timer expires, stopping the first timer.

8. The method according to claim 7, wherein the first timer is a first timer corresponding to a first HARQ process, and the first HARQ process is used to send the first data.

9. The method according to claim 7 or 8, wherein the method further comprises:
if the first timer expires, retransmitting the first data on a third resource, wherein the third resource is a preconfigured resource, and the third resource corresponds to the first HARQ process.

10. The method according to any one of claims 1 to 9, wherein the first information is further used to schedule a resource.

11. The method according to any one of claims 1 to 10, wherein the terminal device is in a radio resource control RRC non-connected state.

12. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 11.

13. A computer-readable storage medium, wherein the computer-readable storage medium is configured to store a computer program, and when the computer program is run on a computer, the computer is enabled to perform the method according to any one of claims 1 to 11.

14. A chip, comprising one or more processors and a communication interface, wherein the one or more processors are configured to read instructions to perform the method according to any one of claims 1 to 11.
